# EUROPEAN PATENT SPECIFICATION

(11) **EP 1 944 186 B1**
(45) Date of publication and mention of the grant of the patent: **14.03.2012**
(21) Application number: 08250062.0
(22) Date of filing: 08.01.2008
(51) Int. Cl.: B60K 28/16, B60W 40/06, B60W 10/06

(54) **Motorcycle**
Motorrad
Motocyclette

(30) Priority: 09.01.2007 JP 2007001052
(43) Date of publication of application: 16.07.2008
(73) Proprietor: Yamaha Hatsudoki Kabushiki Kaisha, Iwata-shi, Shizuoka 438-8501 (JP)
(72) Inventor: Fujita, Hirokazu, Shizuoka-ken 438-8501 (JP); Kinoshita, Tomohiro, Shizuoka-Ken 438-8501 (JP)
(74) Representative: Moreland, David

(56) References cited:
- US-A- 4 554 990

## Description

### FIELD OF THE INVENTION

The invention relates to a motorcycle, a device and a method of controlling the same and a device and a method for detecting a slip quantity of a motorcycle.

### BACKGROUND TO THE INVENTION

Various kinds of traction control methods of a motorcycle are known, for example as disclosed in JP-A-8-232697. Traction control methods which operate on the basis of a slip ratio, for example, are considered. In such a method based on a slip ratio, the slip ratio is calculated on the basis of a rotation speed of a driving wheel and a rotation speed of a driven wheel. Driving force of a vehicle is controlled in accordance with the calculated slip ratio.

A ratio of circumferential length of tires between a front wheel and a rear wheel, however, changes in accordance with an inclining angle of a motorcycle (referred to as a "bank angle", hereinafter). Accordingly, the slip ratio is calculated when the motorcycle is inclined even when the motorcycle does not slip. Further, in the case that the motorcycle has slipped, inclining the motorcycle causes a slip ratio larger or smaller than a slip ratio suitable for an actual slip degree to be calculated. There is thus a problem that it is impossible to carry out accurate traction control of a motorcycle in accordance with the above method.

In view of the above, a traction control method has been proposed which takes a bank angle into consideration, as disclosed in JP-A-8-232697. In this reference, a degree of acceleration slip is determined on the basis of a degree or width of a change in rotational speed (or rotation number) of an engine. Delaying an angle of ignition timing of the engine in accordance with the determined degree of the slip allows an output of the engine to be controlled. In the traction control method of JP-A-8-232697, control is carried out so that the larger the bank angle would be, the larger the delay angle of the ignition timing of the engine would be. Moreover, the delay quantity of the ignition timing of the engine is controlled to be further increased in banking in accordance with an increase in width of a change in rotation number of the engine.

JP-A-8-232697 describes that an output of the engine is suppressed in banking and this allows a slip of a driving wheel in banking to be prevented in accordance with the above method.

The ratio of circumferential length of tires between a front wheel and a rear wheel is not only dependent on a bank angle. For example, the ratio of circumferential length also changes when a speed of a motorcycle changes, and thereby, an expansion ratio of a tire changes. This causes a problem that accurate traction control of a motorcycle cannot be performed even in accordance with the traction control method disclosed in, for example, JP-A-8-232697.

In view of the above, an object of the invention is to achieve more accurate traction control of a motorcycle.

US 4, 554, 990 discloses an anti-slip system for a wheeled vehicle having a drive wheel and a driven wheel. A drive wheel speed sensor senses a rotational speed of the drive wheel to produce a first sensing signal while a driven wheel speed sensor senses a rotational speed of the driven wheel to produce a second sensing signal. A control unit is responsive to the first and second sensing signals for outputting a control signal representative of a slip rate of the drive wheel. A drive control device is responsive to the control signal for controlling drive force of the drive wheel to prevent a slip thereof.

### SUMMARY OF THE INVENTION

The motorcycle in accordance with the invention comprises: a driving source; a driving wheel driven by the driving source; a driven wheel; and.a control part. The motorcycle in accordance with the invention further comprises: a driving wheel speed sensor; and a driven wheel speed sensor. The driving wheel speed sensor detects a speed of the driving wheel. The driven wheel speed sensor detects a speed of the driven wheel. The control part controls tube driving source on the basis of a corrected slip signal. The corrected slip signal is obtained by subtracting a low frequency component of a pre-correction slip signal from the pre-correction slip signal. The pre-correction slip signal is obtained by subtracting a speed of the driven wheel, the speed detected by means of the driven wheel speed sensor, from a speed of the driving wheel, the latter speed detected by means of the driving wheel speed sensor.

The control device in accordance with the invention is for controlling a motorcycle and comprises: a driving source; a driving wheel driven by means of the driving source; a driven wheel; a driving wheel speed sensor for detecting a speed of the driving wheel; and a driven wheel speed sensor for detecting a speed of the driven wheel. The control device in accordance with the invention controls the driving source on the basis of a corrected slip signal. The corrected slip signal is obtained by subtracting a low frequency component of the pre-correction slip signal from the pre-correction slip signal. The pre-correction slip signal is obtained by subtracting a speed of the driven wheel, the speed detected by means of the driven wheel speed sensor, from a speed of the driving wheel, the latter speed detected by means of the driving wheel speed sensor.

The slip quantity detecting device in accordance with the invention is for detecting a slip quantity of a motorcycle and comprises: a driving source; a driving wheel driven by means of the driving source; a driven wheel; a driving wheel speed sensor for detecting a speed of the driving wheel; and a driven wheel speed sensor for detecting a speed of the driven wheel. The slip quantity detecting device in accordance with the invention detects a slip quantity of the motorcycle by subtracting a low frequency component of the pre-correction slip signal from the pre-correction slip signal obtained by subtracting a speed of the driven wheel, the speed detected by means of the driven wheel speed sensor, from a speed of the driving wheel, the latter speed detected by means of the driving wheel speed sensor.

The control method in accordance with the invention is for controlling a motorcycle and comprises: a driving source; a driving wheel driven by means of the driving source; a driven wheel; a driving wheel speed sensor for detecting a speed of the driving wheel; and a driven wheel speed sensor for detecting a speed of the driven wheel. The control method in accordance with the invention controls the driving source on the basis of a corrected slip signal. The corrected slip signal is obtained by subtracting a low frequency component of the pre-correction slip signal from the pre-correction slip signal. The pre-correction slip signal is obtained by subtracting a speed of the driven wheel, the speed detected by means of the driven wheel speed sensor, from a speed of the driving wheel, the latter speed detected by means of the driving wheel speed sensor.

The slip quantity detecting method in accordance with the invention is for detecting a slip quantity of a motorcycle and comprises: a driving source; a driving wheel driven by means of the driving source; a driven wheel; a driving wheel speed sensor for detecting a speed of the driving wheel; and a driven wheel speed sensor for detecting a speed of the driven wheel. The slip quantity detecting method in accordance with the invention detects a slip quantity of the motorcycle by subtracting a low frequency component of the pre-correction slip signal from the pre-correction slip signal obtained by subtracting a speed of the driven wheel, the speed detected by means of the driven wheel speed sensor, from a speed of the driving wheel, the latter speed detected by means of the driving wheel speed sensor.

According to an aspect of the present invention there is provided a motorcycle comprising:
a driving source;
a driving wheel driven by the driving source;
a driven wheel; and
a control part, wherein the control part controls the driving source on the basis of a corrected slip signal obtained by subtracting a low frequency component from a pre-correction slip signal calculated on the basis of a speed of the driving wheel and a speed of the driven wheel.

According to another aspect of the present invention there is provided a method of controlling a motorcycle comprising a driving source, a driven wheel and a driving wheel, said method comprising the steps of:
determining a pre-corrected slip signal by subtracting a speed of the driven wheel from a speed of the driving wheel;
determining a corrected slip signal by subtracting a low frequency component from the pre-correction slip signal; and
controlling the driving source on the basis of the corrected slip signal.

In accordance with the invention, more accurate traction control of a motorcycle may be achieved.

### BRIEF DESCRIPTION OF THE DRAWINGS

These and other aspects of the present invention will now be described, by way of example only, with reference to the accompanying drawings, in which:
Fig. 1 is a left side view of a motorcycle in accordance with Embodiment 1;
Fig. 2 is a simplified view showing a throttle valve 12;
Fig. 3 is a structural view of an ECU in accordance with Embodiment 1;
Fig. 4 is a block diagram showing traction control in Embodiment 1;
Fig. 5 is a graph showing a speed of a front wheel 4, a speed of a rear wheel 7 and a pre-correction slip signal;
Fig. 6 is a graph showing a pre-correction slip signal and an estimated lean component;
Fig. 7 is a graph showing a pre-correction slip signal and a difference in speed between the front wheel 4 and the rear wheel 7 after correction after traction control;
Fig. 8 is a structural view of an ECU in accordance with Modification 1;
Fig. 9 is a block diagram showing traction control in Modification 1;
Fig. 10 is a structural view of an ECU in accordance with Embodiment 2;
Fig. 11 is a block diagram showing traction control in Embodiment 2;
Fig. 12 is a table exemplifying upper limit value data and lower limit value data of a pre-correction slip signal correlated with a speed of the front wheel (a driven wheel speed);
Fig. 13 is a graph exemplifying upper limit value data and lower limit value data of a pre-correction slip signal correlated with a speed of the front wheel (a driven wheel speed);
Fig. 14 is a structural view of an ECU in accordance with Embodiment 3;
Fig. 15 is a block diagram showing traction control in Embodiment 3;
Fig. 16 is a table exemplifying time constant data correlated with a speed of the front wheel 4;
Fig. 17 is a graph exemplifying time constant data correlated with a speed of the front wheel 4;
Fig. 18 is a block diagram showing traction control in Modification 3;
Fig. 19 is a table exemplifying time constant data correlated with a throttle opening;
Fig. 20 is a graph exemplifying time constant data correlated with a throttle opening;
Fig. 21 is a structural view of an ECU in accordance with Modification 4; and
Fig. 22 is a block diagram showing traction control in Modification 4.

### DETAILED DESCRIPTION OF THE DRAWINGS

### Embodiment 1

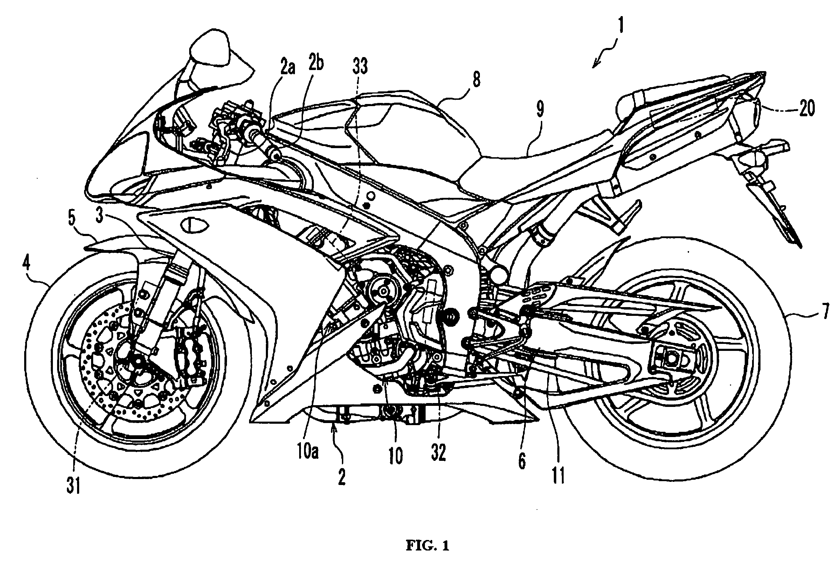

A motorcycle 1 in accordance with Embodiment 1 will now be described with reference to Figs. 1 to 7. The motorcycle 1 shown is of a motorcycle type and is provided as an example of a motorcycle to which the invention may be applied. A motorcycle in accordance with the invention, however, is not limited to the type shown and identified above. The motorcycle in accordance with the invention may be a motorcycle of a type other than the so-called motorcycle type (such as a motorcycle of a so-called moped type, a motor scooter type, an off-road type or the like), for example.

### Structure of Motorcycle 1

Fig. 1 is a left side view of the motorcycle 1 in accordance with Embodiment 1. A schematic structure of the motorcycle 1 will initially be described with reference to Fig. 1. In the following description, a back-and-forth direction and a lateral direction are directions in view of a rider sitting on a seat 9.

The motorcycle 1 comprises a body frame 2. The body frame 2 includes a steering head pipe 2a. To a lower end of the steering head pipe 2a, is mounted a front wheel 4 through a front fork 3 so as to be able to freely rotate. A front fender 5 covering upper and rear parts of the front wheel 4 is mounted to the front fork 3.

To a rear end of the body frame 2 is mounted a swing arm 6 so as to be able to swing. A rear wheel 7 is rotatably mounted to a rear end of the swing arm 6.

Parts of upper and side surfaces of the body frame 2 are covered with a body cover 8. A seat 9 is mounted at a part on a little rear side of the center of the body cover 8 in the back-and-forth direction.

An engine unit 10 is suspended on the body frame 2. The engine unit 10 is formed from an engine 10a as a driving source (a case that the engine 10a is an internal combustion engine is described here, but the engine 10a may be an electric motor engine or the like), a clutch (not shown), a transmission (not shown) and such.

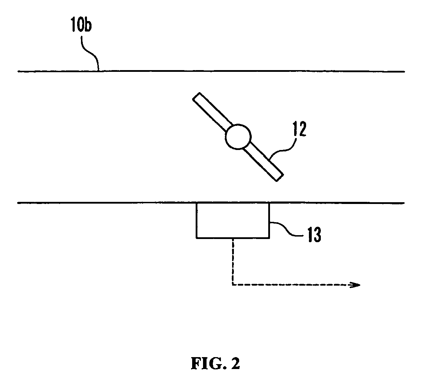

As shown in Fig. 2, an electronic control type throttle valve 12 is provided in an intake pipe 10b of the engine 10a. The throttle valve 12 is connected to a throttle opening sensor 13. Opening (a throttle opening) of the throttle valve 12 is detected by means of the throttle opening sensor 13. The throttle opening sensor 13 is connected to a CPU 21 of an ECU 20, which will be described later in detail.

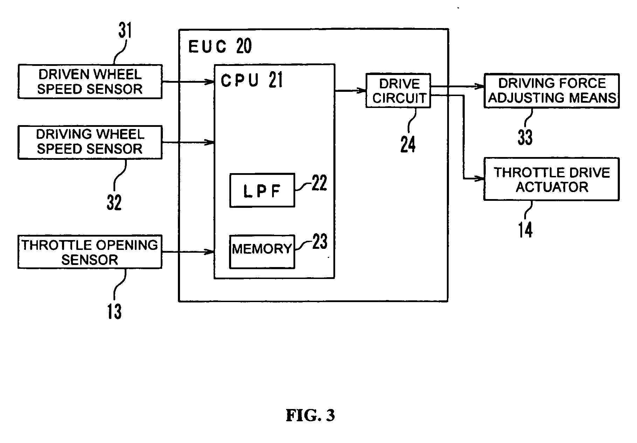

The throttle valve 12 is connected to a throttle drive actuator 14 (not shown in Fig. 2; refer to Fig. 3). The throttle valve 12 is driven by means of the throttle drive actuator 14. The throttle drive actuator 14 is connected to the CPU 21 to be driven by means of the CPU 21 in accordance with a degree of rotation of an acceleration grip 2b (Fig.1).

Driving force generated in the engine unit 10 is transmitted to the rear wheel 7 through a driving force transmitting means 11 such as a chain, a belt, a drive shaft or the like. Accordingly, in Embodiment 1, the rear wheel 7 forms a driving wheel. On the other hand, the front wheel 4 forms a driven wheel. A width of the rear wheel 7 (particularly, a width of a cross section of the rear wheel 7 in the case that the motorcycle 1 stops) and a width of the front wheel 4 (particularly, a width of a cross section of the front wheel 4 in the case that the motorcycle 1 stops) may be equal to each other. The width of the rear wheel 7 and the width of the front wheel 4 may be different from each other. The rear wheel 7 may be formed from one wheel. The rear wheel 7 may be formed from plural wheels provided in parallel in a vehicle width direction.

On a rear side of the seat 9 of the vehicle cover 8 in the back-and-forth direction, the ECU (engine control unit) 20 is mounted. The ECU 20 is for controlling the engine unit 10. The motorcycle 1 is further provided with a driven wheel speed sensor 31 and a driving wheel speed sensor 32. The driven wheel speed sensor 31 detects a speed of the front wheel 4. The driving wheel speed sensor 32 detects a speed of the rear wheel 7. Moreover, the motorcycle 1 is provided with a driving force adjusting means 33 for adjusting ignition timing of the engine 10a and the like. In Embodiment 1, the driving force adjusting means 33 and the ECU 20 form a control part.

### Structure of ECU 20

Fig. 3 is a structural view of the ECU 20. As shown in Fig. 3, the ECU 20 comprises the CPU 21 and a drive circuit 24. The CPU 21 comprises a memory 23. The CUP 21 and the drive circuit 24 form an operation part. The memory 23 stores various kinds of settings and such. A storing device such as a hard disc may be provided other than the memory 23.

The CPU 21 carries out a low-pass filter process (an LPF process). For the sake of convenience in description, shown is a low-pass filter (an LPF) 22 in the CPU 21 in Fig. 3 and such, but a circuit functioning as the low-pass filter 22 is not separately provided in Embodiment 1. The invention, however, is not limited to the above. The low-pass filter 22 may be provided as a separate circuit.

The CPU 21 is connected to the throttle opening sensor 13, the driven wheel speed sensor 31, the driving wheel speed sensor 32 and the drive circuit 24. The drive circuit 24 is further connected to the driving force adjusting means 33 and the throttle drive actuator 14.

As described above, the throttle drive actuator 14 is for driving the throttle valve 12. A control signal is outputted from the drive circuit 24 to the throttle drive actuator 14 in accordance with the throttle opening detected by means of the throttle opening sensor 13, a degree of rotation of the acceleration grip 2b and such. The throttle drive actuator 14 drives the throttle valve 12 on the basis of the control signal.

### Outline of Traction Control in Embodiment 1

Traction control in Embodiment 1 is for effectively preventing slippage occurring in banking the motorcycle 1. A slip signal obtained by subtracting a speed of the front wheel 4 (a driven wheel speed) from a speed of the rear wheel 7 (a driving wheel speed) is roughly divided into a component caused by banking of the motorcycle 1 (referred to as a "lean component", hereinafter) and a component caused by a slip of at least one of the front wheel 4 and the rear wheel 7 (referred to as a "slip component", hereinafter). The lean component is not generated when inclination of the motorcycle 1 is not changed. The lean component is generated when a driver carries out an operation of banking the motorcycle 1 and the inclination of the motorcycle 1 is changing. That is to say, the lean component is generated by an operation of banking the motorcycle 1 by a driver. The operation of banking the motorcycle 1 by a driver is generally performed relatively slowly. Accordingly, the lean component is lower than the slip component in frequency. As a result of diligent study, the present inventors found the difference in frequency between the lean component and the slip component for the first time. This allows the invention, as exemplified in Embodiment 1, to be carried out in practice.

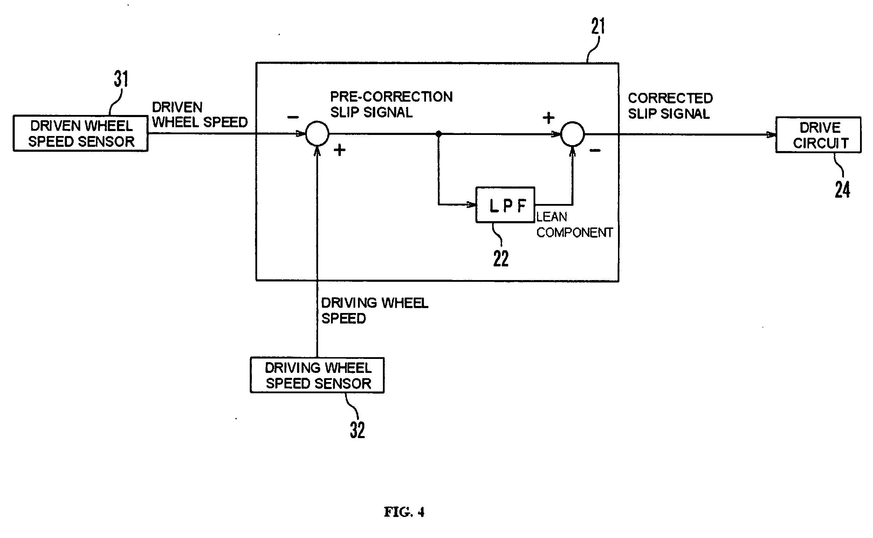

The traction control method in accordance with Embodiment 1 is a method of controlling the engine 10a on the basis of a corrected slip signal obtained by subtracting a low frequency component, which is the lean component, from a slip signal (a pre-correction slip signal) obtained by subtracting a speed of the front wheel 4 (a driven wheel speed) from a speed of the rear wheel 7 (a driving wheel speed). The traction control in Embodiment 1 will be described hereinafter in detail with reference to Fig. 4.

### Contents of Traction Control in Embodiment 1

Fig. 4 is a block diagram showing the traction control in Embodiment 1. As shown in Fig. 4, the driven wheel speed sensor 31 outputs a speed of the front wheel 4 (a driven wheel speed) to the CPU 21. The driving wheel speed sensor 32 outputs a speed of the rear wheel 7 (a driving wheel speed) to the CPU 21. The CPU 21 subtracts the driven wheel speed from the driving wheel speed to obtain a pre-correction slip signal.

Further, the CPU 21 performs a low-pass filter process for the pre-correction slip signal to take out only a low frequency component of the pre-correction slip signal. The low frequency component in the above context means a component supposed to be the lean component. Specifically, the low frequency component is a component of the pre-correction slip signal, which has a frequency lower than that of the slip component. A cutoff frequency of the low frequency component can be properly set, taking account of motorcycle type, road surface conditions and the like. For example, the cutoff frequency of the low frequency component may be set at 5 Hz or 3Hz. That is to say, the low frequency component can be set as a component having the frequency equal to or lower than 5 or 3 Hz.

The CPU 21 subtracts the low frequency component, which has been taken out, (a part supposed to be the lean component) from the pre-correction slip signal to obtain the corrected slip signal. The CPU 21 outputs the corrected slip signal to the drive circuit 24.

The drive circuit 24 outputs a control signal corresponding to the corrected slip signal to the driving force adjusting means 33 and the throttle drive actuator 14 (refer to Fig. 3). The driving force adjusting means 33 and the throttle drive actuator 14 contribute to control an output of the engine 10a. Specifically, the driving force adjusting means 33 controls the engine 10a in accordance with the control signal. In detail, the driving force adjusting means 33 adjusts ignition timing of the engine 10a (the rotation number of the engine 10a) in accordance with the control signal. For example, the ignition timing of the engine 10a may be delayed in accordance with the control signal. On the other hand, the throttle drive actuator 14 adjusts an opening of the throttle valve 12 (a throttle opening) in accordance with the control signal outputted from the drive circuit 24. A method of adjusting the driving force outputted from the engine 10a, however, is not particularly limited in the invention.

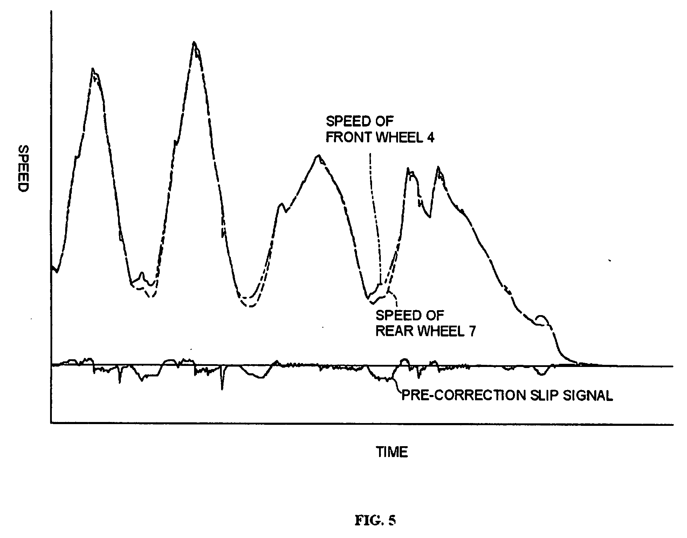

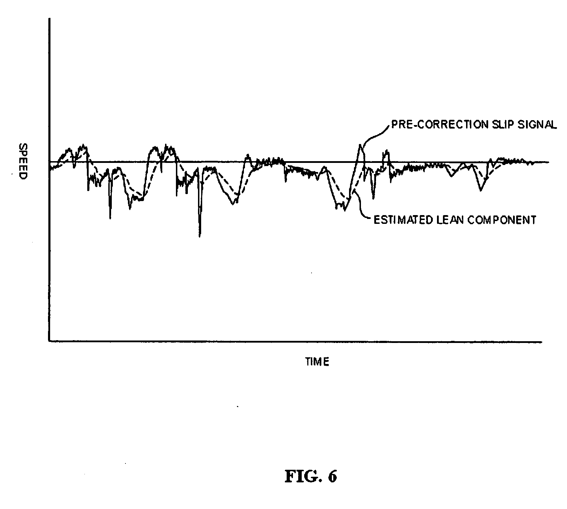

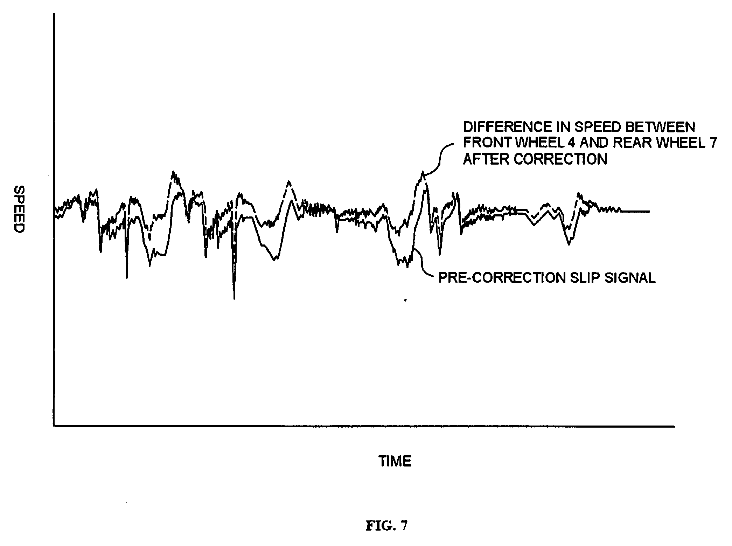

Figs. 5 to 7 exemplify the speed of the front wheel 4 and the rear wheel 7, the difference in speed between the front wheel 4 and the rear wheel 7 after correction and such in the case of performing the traction control in accordance with Embodiment 1. Fig. 5 is a graph showing the speed of the front wheel 4 (the driven wheel speed), the speed of the rear wheel 7 (the driving wheel speed) and the pre-correction slip signal (the difference in speed between the front wheel 4 and the rear wheel 7). Fig. 6 is a graph showing the pre-correction slip signal and a supposed lean component (namely, a low frequency component). Fig. 7 is a graph showing the pre-correction slip signal and the difference in speed between the front wheel 4 and the rear wheel 7 after correction after the traction control has been performed. In accordance with Fig. 7, it is found that the traction control in Embodiment 1 allows a more accurate slip signal to be obtained.

### Operation and Effect

As described above, a low frequency component (a part supposed to be the lean component) is removed from the pre-correction slip signal to control the engine 10a on the basis of the corrected slip signal supposed to be the slip component. Accordingly, a slip can be accurately prevented from occurring.

In the case that the slip component includes a low frequency component, the corrected slip signal is to include no low frequency component of the slip component. Accordingly, the engine 10a is not likely to be controlled in accordance with a degree of the slip. As a result, a slip with a comparatively low frequency is likely to occur. A driver, however, can comparatively easily respond to the slip with a comparatively low frequency. Therefore, not so much difficulty arises in driving the motorcycle 1. That is to say, in the traction control method in accordance with Embodiment 1, at least a slip with a comparatively high frequency, which is difficult for a driver to respond or react to, can be prevented effectively although there is a case that a slip cannot be prevented completely. This allows the motorcycle 1 which is excellent in stability in running to be achieved.

A method of calculating the corrected slip signal is not specifically limited. The corrected slip signal can be easily calculated at a low cost by performing the low-pass filter process as in Embodiment 1.

A bank angle of the motorcycle 1 is difficult to accurately detect. This is because expansion of the front wheel 4 and the rear wheel 7 is different from each other in accordance with a running speed of the motorcycle 1. Accordingly, a traction control method performed on the basis of the bank angle like the control method disclosed in JP-A-8-232697 cannot sufficiently prevent a slip. Further, there is a possibility of occurrence of a slip with a comparatively high frequency, which is difficult for a driver to control. Moreover, a bank angle detection sensor is comparatively expensive. This causes a rise in cost of the motorcycle 1. On the other hand, many motorcycles 1 are provided with the driven wheel speed sensor 31 and the driving wheel speed sensor 32. The driven wheel speed sensor 31 and the driving wheel speed sensor 32 are comparatively inexpensive. Therefore, the traction control method in accordance with Embodiment 1 can be practically carried out without greatly raising the cost of the motorcycle 1.

### Modification 1

In Embodiment 1, an example of carrying out the low-pass filter process to calculate the corrected slip signal is described. The calculation method of the corrected slip signal, however, is not specifically limited in the invention. In accordance with a first modification (Modification 1), an example of carrying out a high-pass filter process to calculate the corrected slip signal will be described. The description of Modification 1 refers to Figs. 1 and 2 in common with Embodiment 1. Components having functions substantially same as those in Embodiment 1 are described with reference numerals in common with Embodiment 1 and as such a further description has been omitted.

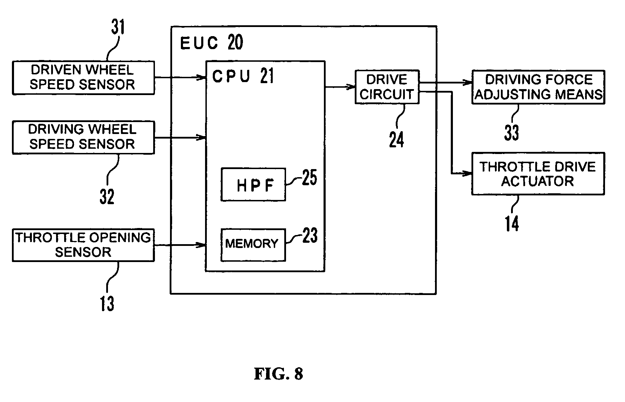

Fig. 8 is a structural view of the ECU 20 in Modification 1. In Modification 1, the ECU 20 comprises the CPU 21 and the drive circuit 24. The CUP 21 comprises the memory 23.

In Modification 1, the CPU 21 carries out a high-pass filter process (an HPF process). For the sake of convenience in description, a high-pass filter (HPF) 25 is shown in the CPU 21 in Fig. 8 and such. A circuit functioning as the high-pass filter 25 is not provided separately in Modification 1. The invention, however, is not limited to the above. The high-pass filter 25 may be provided as a separate circuit.

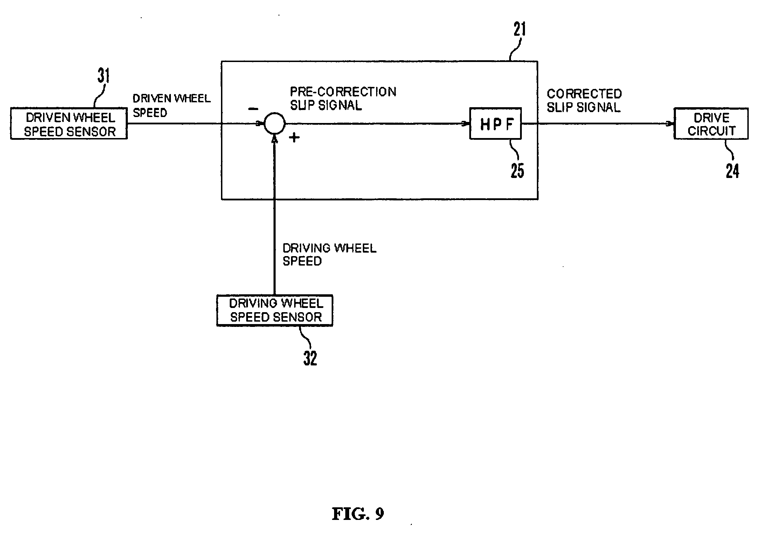

Fig. 9 is a block diagram showing traction control in Modification 1. As shown in Fig. 9, the driven wheel speed sensor 31 outputs a speed of the front wheel 4 (a driven wheel speed) to the CPU 21. The driving wheel speed sensor 32 outputs a speed of the rear wheel 7 (a driving wheel speed) for the CPU 21. The CPU 21 subtracts the driven wheel speed from the driving wheel speed to obtain the pre-correction slip signal.

The CPU 21 takes out only a high frequency component of the pre-correction slip signal. The high frequency component of the pre-correction slip signal in the above context means a component obtained by removing the low frequency component in Embodiment 1 from the pre-correction slip signal. That is to say, the high frequency component is a part of the pre-correction slip signal, which is supposed to be the slip component. In Modification 1, the high frequency component is to be the corrected slip signal.

The CPU 21 outputs the high frequency component (the corrected slip signal) to the drive circuit 24. The drive circuit 24 outputs a control signal corresponding to the corrected slip signal to the driving force adjusting means 33 and the throttle drive actuator 14 (refer to Fig. 8). The driving force control means 33 and the throttle drive actuator 14 control the engine 10a in accordance with the control signal.

As described above, it may be possible to also perform the high-pass filter process to calculate the corrected slip signal.

### Embodiment 2

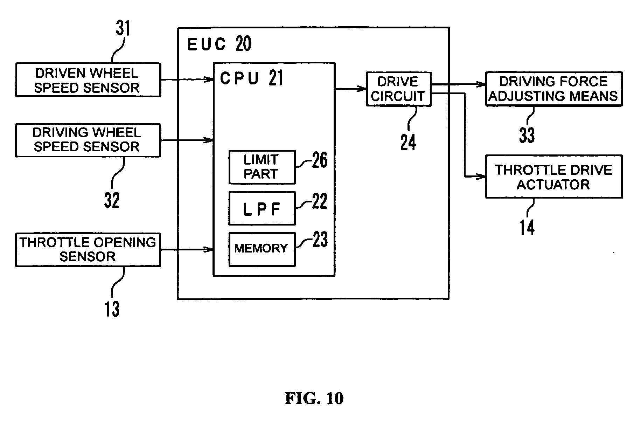

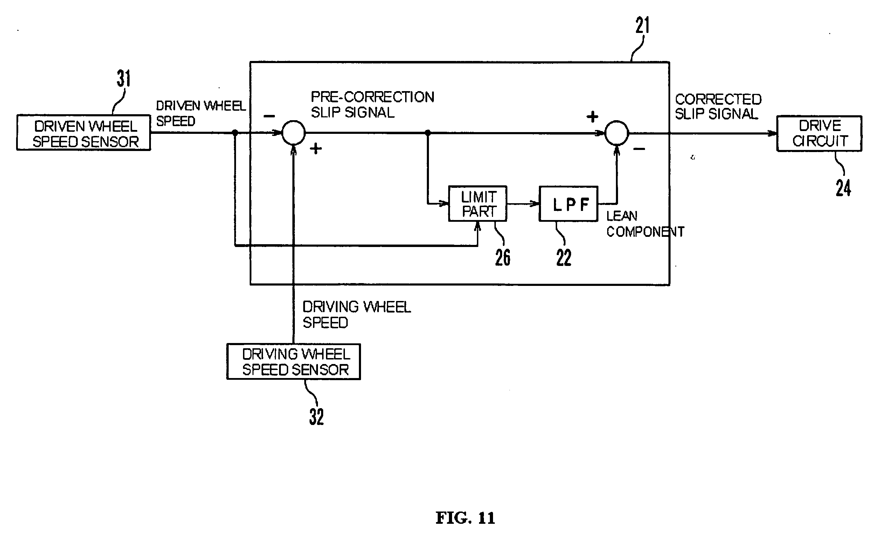

Fig. 10 is a structural view of the ECU 20 in a second embodiment (Embodiment 2) of the invention. Fig. 11 is a block diagram showing traction control in Embodiment 2. A structure of the ECU 20 and the traction control in Embodiment 2 will be described with reference to Figs. 10 and 11. The description of Embodiment 2 refers to Figs. 1 and 2 in common with Embodiment 1. Components having functions substantially same as those in Embodiment 1 are described with reference numerals in common with Embodiment 1 and as such a further description of these similar components will be omitted.

As shown in Fig. 10, the ECU 20 in Embodiment 2 comprises the CPU 21 and the drive circuit 24. The CPU 21 carries out the low-pass filter process (the LPF process), similar to Embodiment 1. The CPU 21 also carries out a limit process on the basis of limit data, as described later in detail. The CUP 21 comprises a memory 23. A limit part (a limit circuit) for carrying out the limit process may be provided separately from the CPU 21.

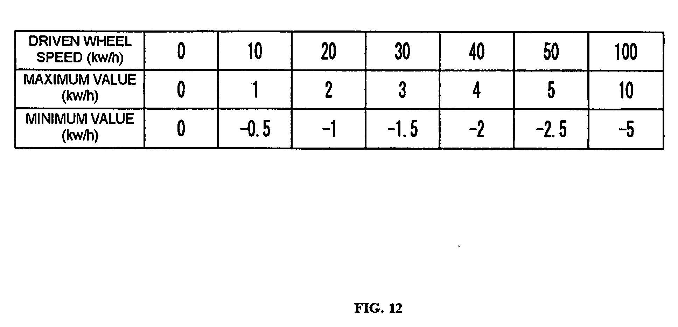

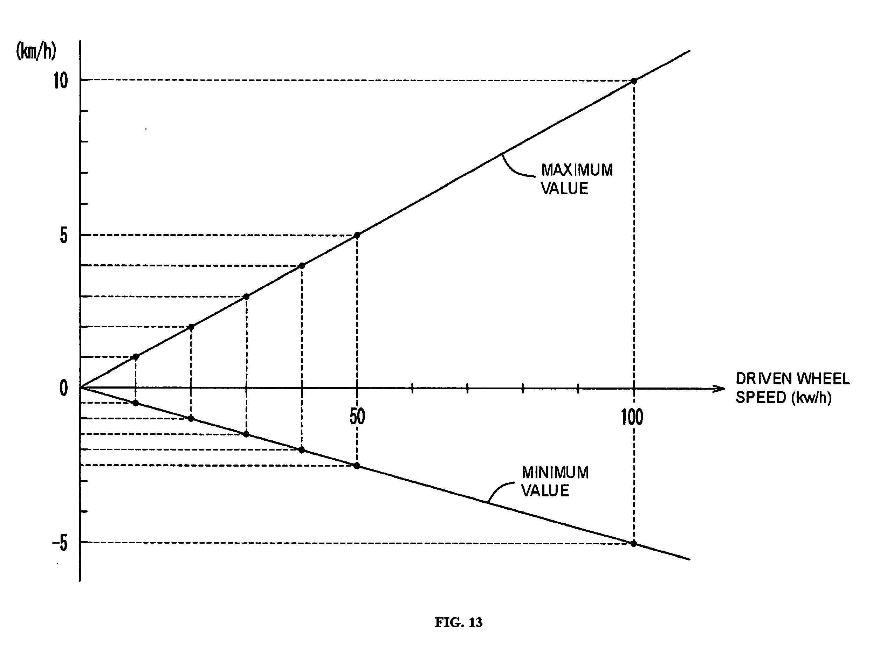

In Embodiment 2, in the memory 23, data is stored which relates to an upper limit value and a lower limit value of the pre-correction slip signal (referred to as "limit data", hereinafter). The limit data may be upper limit value data and lower limit value data of the pre-correction slip signal correlating with at least one of the speed of the front wheel 4 and the speed of the rear wheel 7 (a correlation of at least one of the speed of the front wheel 4 and the speed of the rear wheel 7 with the upper limit value data and the lower limit value data of the pre-correction slip signal), as exemplified in Figs. 12 and 13. Specifically, the limit data may be the upper limit value data and the lower limit value data of the pre-correction slip signal, which is correlated with the speed of the rear wheel 7 (the driving wheel speed), for example. Further, the limit data may be the upper limit value data and lower limit value data of the pre-correction slip signal, which is correlated with an average value of the speed of the front wheel 4 (the driven wheel speed) and the speed of the rear wheel 7 (the driving wheel speed) . An example will now be described in which the limit data is a correlation of the speed of the front wheel 4 (the driven wheel speed) with the upper limit value data and the lower limit value data of the pre-correction slip signal.

### Traction Control in Embodiment 2

As shown in Fig. 11, the driven wheel speed sensor 31 outputs a speed of the front wheel 4 (a driven wheel speed) to the CPU 21. The driving wheel speed sensor 32 outputs a speed of the rear wheel 7 (a driving wheel speed) for the CPU 21. The CPU 21 subtracts the driven wheel speed from the driving wheel speed to obtain the pre-correction slip signal.

The CPU 21 obtains an upper limit value and a lower limit value of the pre-correction slip signal corresponding to the driven wheel speed (or alternatively, the driving wheel speed or an average value between the driven wheel speed and the driving wheel speed) on the basis of the limit data stored in the memory 23 and the driven wheel speed (the driving wheel speed in the case that the limit data is a correlation of the upper limit value and the lower limit value of the pre-correction slip signal with the driving wheel speed, and an average value between the speed of the front wheel 4 (the driven wheel speed) and the speed of the rear wheel 7 (the driving wheel speed) in the case that the limit data is a correlation of the upper limit value and the lower limit value of the pre-correction slip signal with the average value between the speed of the front wheel 4 (the driven wheel speed) and the speed of the rear wheel 7 (the driving wheel speed) ).

The CPU 21 carries out the limit process. That is, the CPU 21 limits the pre-correction slip signal so that the pre-correction slip signal would be equal to or more than the lower limit value and equal to or less than the upper limit value. Specifically, a part of the pre-correction slip signal, which is equal to or more than the lower limit value and equal to or less than the upper limit value, is left as it is while a part of the pre-correction slip signal, which is less than the lower limit value, is set as the lower limit value. A part of the pre-correction slip signal, which is more than the upper limit value, is set as the upper limit value.

For example, on the basis of Figs. 12 and 13, the CPU 21 judges that the upper limit value of the pre-correction slip signal is 10 km per hour in the case that the speed of the front wheel 4 (the driven wheel speed) is 100 km per hour. The CPU 21 judges that the lower limit value of the pre-correction slip signal is -5 km per hour. Accordingly, the CPU 21 judges that a part (a time range) of the pre-correction slip signal, which exceeds 10 km per hour, is 10 km per hour. The CPU 21 judges that a part (a time range) of the pre-correction slip signal, which is lower than -5 km per hour, is -5 km per hour.

The upper limit value and the lower limit value of the pre-correction slip signal are an upper limit value and a lower limit value of a difference between the driving wheel speed and the driven wheel speed. In the case that the driven wheel speed sensor 31 and the driving wheel speed sensor 32 detect a speed on the basis of a voltage, for example, the upper limit value and the lower limit value of the pre-correction slip signal are not an upper limit value and a lower limit value of the detected voltage.

The CPU 21 carries out the low-pass filter process. That is, the CPU 21 takes out only a low frequency component (same as the low frequency component in Embodiment 1, namely, a part supposed to be the lean component) from the pre-correction slip signal limited as described above. The CPU 21 subtracts the low frequency component from the pre-correction slip signal to obtain the corrected slip signal. The CPU 21 outputs the corrected slip signal to the drive circuit 24.

The drive circuit 24 outputs a control signal corresponding to the corrected slip signal to the driving force adjusting means 33 and the throttle drive actuator 14 (refer to Fig. 10). The driving force control means 33 and the throttle drive actuator 14 contribute to control an output of the engine 10a.

### Operation and Effect

Limiting in advance a size of the pre-correction slip signal before the low-pass filter process as in Embodiment 2 allows the traction control to be accurately performed even when an excessive slip occurs for a long period.

When a slip continues for a long period, lowered is a frequency of the slip component of the detected pre-correction slip signal. Accordingly, the slip component of the pre-correction slip signal is trapped in the low-pass filter process when no limit process is carried out. As a result, no traction control is performed. This causes an excessive slip, and thereby, no traction control is carried out on the way in the case that it is impossible to instantly get out of a slip condition, so that the motorcycle 1 continues to slip.

On the other hand, in Embodiment 2, a size of the pre-correction slip signal is limited before the low-pass filter process. Accordingly, the slip component caused by a slip for a long period is not trapped in the low-pass filter process. This results in accurate traction control even when an excessive slip occurs for a long period.

The upper limit value and the lower limit value of the pre-correction slip signal (a difference between the speed of the front wheel 4 and the speed of the rear wheel 7) are different at each vehicle speed. The faster the vehicle speed (or the driven wheel speed) is, the larger the upper limit value and the lower limit value of the pre-correction slip signal are to be. In the case of comparison between running at 30 km per hour and running at 100 km per hour, for example, the upper limit value and the lower limit value of the pre-correction slip signal are larger in running at 100 km per hour. Accordingly, using fixed limit data for each vehicle speed (or each driven wheel speed) is likely to cause inaccurate traction control at a certain vehicle speed.

In Embodiment 2, the limit data is used correlated with the driven wheel speed (or the vehicle speed, the driving wheel speed, an average value between the driven wheel speed and the driving wheel speed or the like). This allows the traction control to be accurately performed regardless of the vehicle speed of the motorcycle 1.

### Embodiment 3

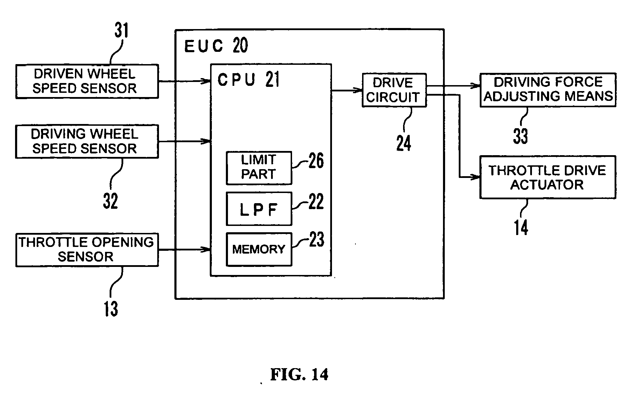

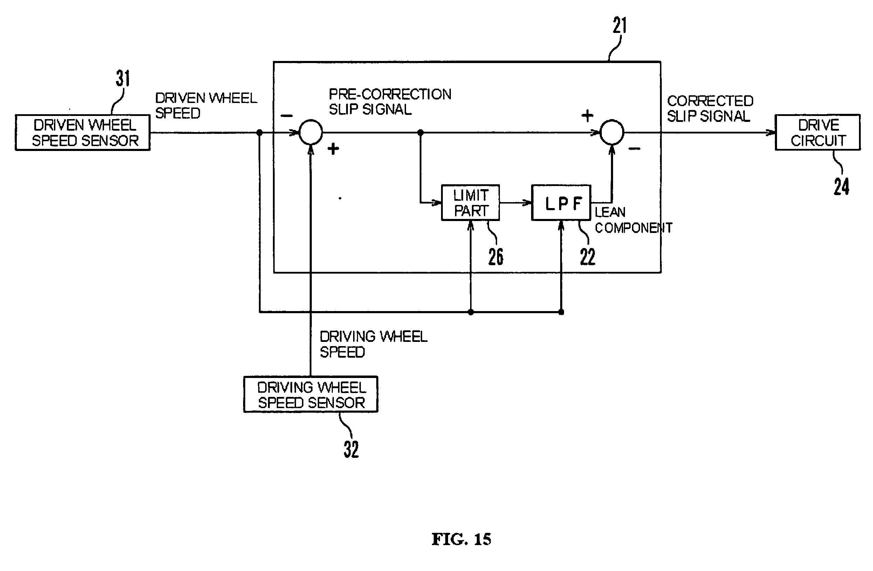

Fig. 14 is a structural view of the ECU 20 in accordance with a third embodiment (Embodiment 3) of the present invention. Fig. 15 is a block diagram showing traction control in Embodiment 3. A structure of the ECU 20 and the traction control in Embodiment 3 will be described with reference to Figs. 14 and 15. The description of Embodiment 3 refers to Figs. 1 and 2 in common with Embodiment 1. Components having functions substantially same as those in Embodiment 1 are described with reference numerals in common with Embodiments 1 and 2 and as such a further description is omitted.

As shown in Fig. 14, the ECU 20 in accordance with Embodiment 3 comprises the CPU 21 and the drive circuit 24. The CPU 21 carries out the low-pass filter process (the LPF process), similarly to Embodiment 1. The CPU 21 also carries out the limit process on the basis of limit data, as described later in detail. The CPU 21 comprises the memory 23. A limit part (a limit circuit) for carrying out the limit process may be provided separately from the CPU 21.

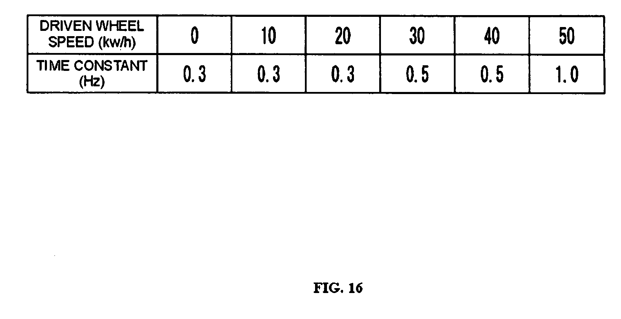

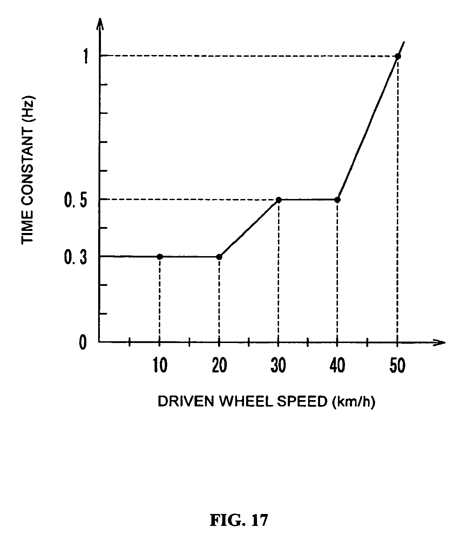

In Embodiment 3, data is stored in the memory 23 which relates to a correlation of at least one of a speed of the front wheel 4 (a driven wheel speed), a speed of the rear wheel 7 (a driving wheel speed), a throttle opening and engine torque with a time constant, the data exemplified in Figs. 16 and 17, (time constant data) together with the limit data. Specifically, in Embodiment 3, an example is described in which the correlation of a speed of the front wheel 4 (a driven wheel speed) with a time constant is stored in the memory 23, as shown in Figs. 16 and 17. The time constant data, however, may be a correlation of a time constant with a speed of the rear wheel 7 (a driving wheel speed), for example. The time constant data may be also a correlation of a time constant with an average value between a speed of the front wheel 4 (a driven wheel speed) and a speed of the rear wheel 7 (a driving wheel speed), for example. The time constant data may be a correlation with engine torque, for example. Engine torque can be estimated on the basis of a throttle opening, a rotation number of the engine 10a and the like.

The time constant data in Embodiment 3 is set, noting that a speed of an operation of banking the motorcycle 1 by a driver is different for each vehicle speed of the motorcycle 1. In a range of a comparatively slow vehicle speed (driven wheel speed) in which the operation of banking the motorcycle 1 is (assumed to be) comparatively fast, set is a comparatively small time constant. On the other hand, a comparatively large time constant is set in a range of a comparatively fast vehicle speed (a driven wheel speed range) in which the operation of banking the motorcycle 1 is (assumed to be) comparatively slow.

### Traction Control in Embodiment 3

As shown in Fig. 15, the driven wheel speed sensor 31 outputs a speed of the front wheel 4 (a driven wheel speed) to the CPU 21. The driving wheel speed sensor 32 outputs a speed of the rear wheel 7 (a driving wheel speed) for the CPU 21. The CPU 21 subtracts the driven wheel speed from the driving wheel speed to obtain the pre-correction slip signal.

The CPU 21 obtains an upper limit value and a lower limit value of the pre-correction slip signal corresponding to the driven wheel speed (otherwise, the driving wheel speed or an average value between the driven wheel speed and the driving wheel speed) on the basis of the limit data stored in the memory 23 (same as the one described in Embodiment 2) and the driven wheel speed (the driving wheel speed in the case that the limit data is a correlation of the upper limit value and the lower limit value of the pre-correction slip signal with the driving wheel speed, and an average value between the speed of the front wheel 4 (the driven wheel speed) and the speed of the rear wheel 7 (the driving wheel speed) in the case that the limit data is a correlation of the upper limit value and the lower limit value of the pre-correction slip signal with the average value between the speed of the front wheel 4 (the driven wheel speed) and the speed of the rear wheel 7 (the driving wheel speed)).

The CPU 21 carries out the limit process similarly to Embodiment 2. Thus, the CPU 21 limits the pre-correction slip signal so that the pre-correction slip signal would be equal to or more than the lower limit value and equal to or less than the upper limit value.

The CPU 21 reads in the time constant data stored in the memory 23 (data relating to the time constant, which is shown in Figs. 16 and 17, for example). The CPU 21 calculates a cutoff frequency, which is based on the time constant data, on the basis of an average of the time constant data and the driven wheel speed (the driving wheel speed in the case that the time constant data is a correlation of the time constant with the driving wheel speed, and an average value between the speed of the front wheel 4 (the driven wheel speed) and the speed of the rear wheel 7 (the driving wheel speed) in the case that the time constant data is a correlation of the time constant with the average value between the driven wheel speed and the driving wheel speed).

For example, on the basis of Figs. 16 and 17, the time constant is judged to be 0.5 Hz in the case that a speed of the front wheel 4 (a driven wheel speed) is 30 km per hour. That is to say, the CPU 21 sets the cutoff frequency at 0.5 Hz.

The CPU 21 takes out only a low frequency component (same as the low frequency component in Embodiment 1, namely, a part supposed to be the lean component) from the pre-correction slip signal limited as described above on the basis of the cutoff frequency.

The CPU 21 subtracts the low frequency component from the pre-correction slip signal to obtain the corrected slip signal. The CPU 21 outputs the corrected slip signal to the drive circuit 24. The drive circuit 24 outputs a control signal corresponding to the corrected slip signal to the driving force adjusting means 33 and the throttle drive actuator 14 (refer to Fig. 14). The driving force control means 33 and the throttle drive actuator 14 contribute to control an output of the engine 10a.

### Operation and Effect

As described above, generally, a frequency of the lean component on the basis of the operation of banking the motorcycle 1 by a driver is comparatively low and greatly different from a frequency of the slip component. Accordingly, it can be considered to fix the cutoff frequency as in Embodiment 1.

A speed of the operation of banking the motorcycle 1 by a driver, however, is different for each vehicle speed of the motorcycle 1. For example, an operation of comparatively quickly banking the motorcycle 1 is possible when the vehicle speed of the motorcycle 1 is comparatively slow. On the other hand, it is difficult to quickly bank the motorcycle 1 in the case that the vehicle speed of the motorcycle 1 is comparatively fast, so that the motorcycle 1 is banked slowly in a normal case. Accordingly, a frequency of the lean component is different for each vehicle speed of the motorcycle 1.

In Embodiment 3, a cutoff frequency is calculated on the basis of the time constant data. This allows the lean component to be more accurately subtracted from the pre-correction slip signal in accordance with a vehicle speed of the motorcycle 1. This enables the more preferable traction control to be achieved.

In Embodiment 3, an example of a structure in which the low-pass filter process is carried out has been described. It may be possible, however, to carry out the high-pass filter process as in Modification 1.

### Modification 3

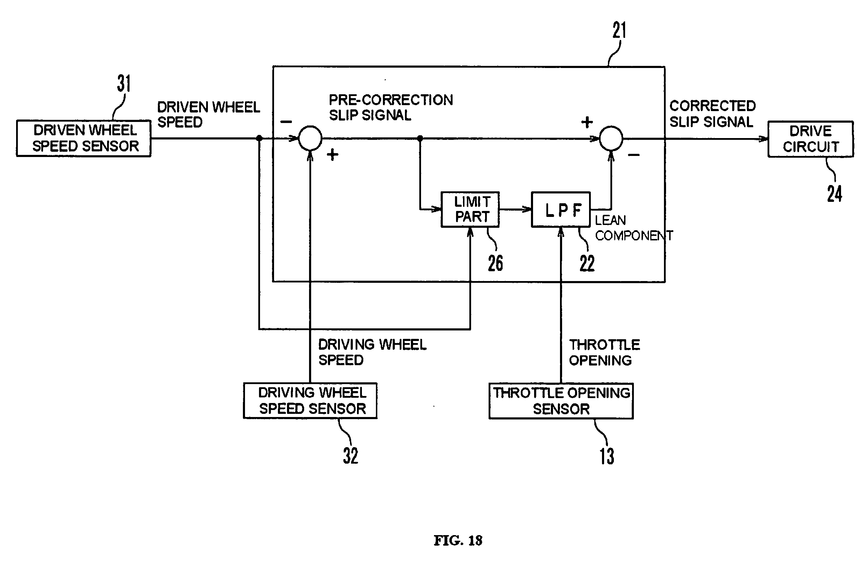

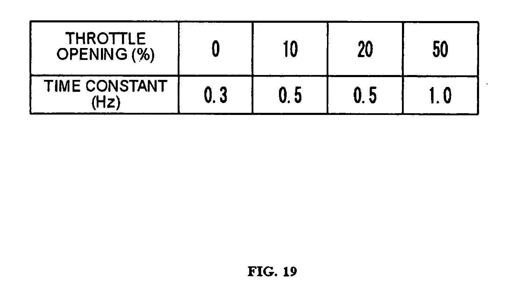

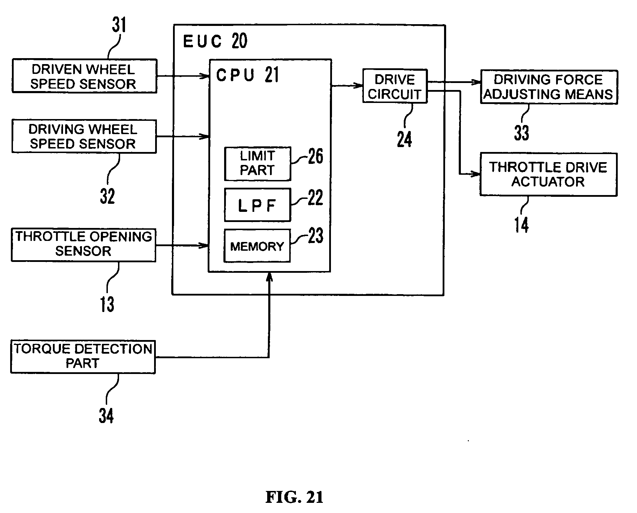

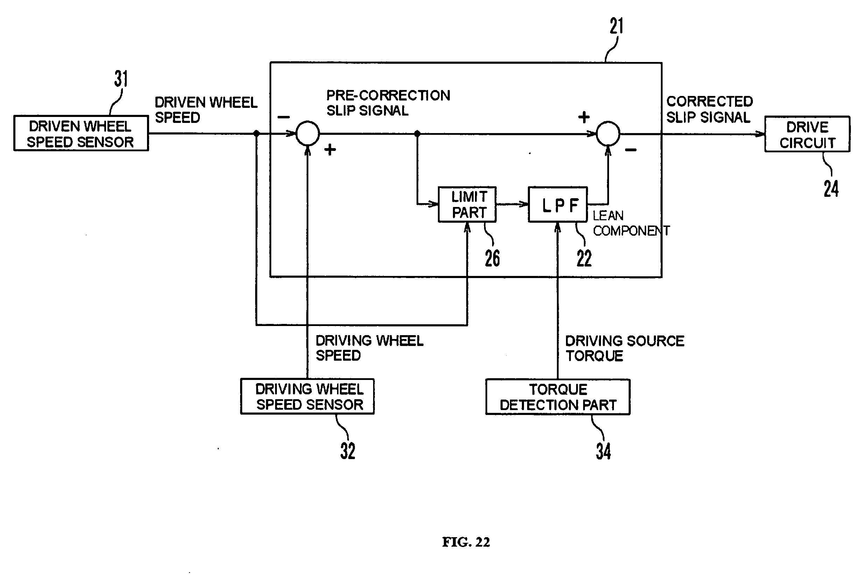

In Embodiment 3, an example of calculating a cutoff frequency on the basis of the time constant data indicating a correlation of the driven wheel speed with a time constant is described. A cutoff frequency, however, may be calculated on the basis of another kind of time constant data. In Modification 3, an example of calculating a cutoff frequency on the basis of time constant data indicating a correlation of a throttle opening with a time constant will be described, with reference to Figs. 18 and 19. In Modification 4, an example of calculating a cutoff frequency on the basis of time constant data indicating a correlation of torque of the engine (the driving source) 10a with a time constant will be described, with reference to Figs. 21 and 22.

The description of Modification 3 refers to Figs. 1 and 2 in common with Embodiment 1 and Fig. 14 in common with Embodiment 3. Components having functions substantially same as those in Embodiments 1 to 3 and Modification 1 are described with reference numerals in common with Embodiments 1 to 3 and Modification 1 and as such a further description is omitted.

### Traction Control in Modification 3

As shown in Fig. 18, the driven wheel speed sensor 31 outputs a speed of the front wheel 4 (a driven wheel speed) to the CPU 21. The driving wheel speed sensor 32 outputs a speed of the rear wheel 7 (a driving wheel speed) for the CPU 21. The CPU 21 subtracts the driven wheel speed from the driving wheel speed to obtain the pre-correction slip signal.

The CPU 21 obtains an upper limit value and a lower limit value of the pre-correction slip signal corresponding to the driven wheel speed (otherwise, the driving wheel speed or an average value between the driven wheel speed and the driving wheel speed) on the basis of the limit data stored in the memory 23 (same as the one described in Embodiment 2) and the driven wheel speed (the driving wheel speed in the case that the limit data is a correlation of the upper limit value and the lower limit value of the pre-correction slip signal with the driving wheel speed, and an average value between the speed of the front wheel 4 (the driven wheel speed) and the speed of the rear wheel 7 (the driving wheel speed) in the case that the limit data is a correlation of the upper limit value and the lower limit value of the pre-correction slip signal with the average value between the speed of the front wheel 4 (the driven wheel speed) and the speed of the rear wheel 7 (the driving wheel speed)).

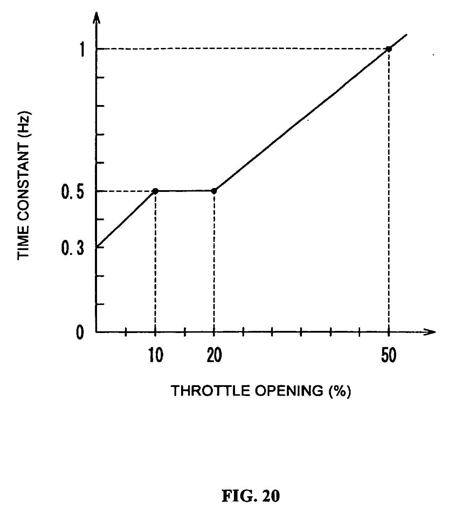

The CPU 21 limits the pre-correction slip signal so that the pre-correction slip signal would be equal to or more than the lower limit value and equal to or less than the upper limit value, similar to Embodiment 2. Further, the CPU 21 reads in the time constant data stored in the memory 23, the data exemplified in Figs. 19 and 20. The CPU 21 calculates a cutoff frequency, which is based on the time constant data, on the basis of the time constant data and the throttle opening detected by means of the throttle opening sensor 13.

The CPU 21 takes out only a low frequency component (same as the low frequency component in Embodiment 1, namely, a part supposed to be the lean component) from the pre-correction slip signal limited as described above on the basis of the calculated cutoff frequency.

The CPU 21 subtracts the low frequency component from the pre-correction slip signal to obtain the corrected slip signal. The CPU 21 then outputs the corrected slip signal to the drive circuit 24. The drive circuit 24 outputs a control signal corresponding to the corrected slip signal to the driving force adjusting means 33 and the throttle drive actuator 14 (refer to Fig. 14). The driving force control means 33 and the throttle drive actuator 14 contribute to control an output of the engine 10a.

### Modification 4

Described hereinafter will be a structure of the ECU 20 and traction control in Modification 4. The description of Modification 4 refers to Figs. 1 and 2 in common with Embodiment 1. Components having functions substantially same as those in Embodiments 1 to 3 and Modification 1 are described with reference numerals in common with Embodiments 1 to 3 and Modification land as such a further description is omitted.

Fig. 21 is a structural view of the ECU 20 in accordance with Modification 4. The ECU 20 in accordance with Modification 4 is different from the ECU 20 in accordance with Embodiment 3 only in that it includes a torque detection part 34. The torque detection part 34 detects torque of the engine 10a. The torque detection part 34 outputs the detected torque of the engine 10a to the CPU 21.

### Traction Control in Modification 4

As shown in Fig. 22, the driven wheel speed sensor 31 outputs a speed of the front wheel 4 (a driven wheel speed) to the CPU 21. The driving wheel speed sensor 32 outputs a speed of the rear wheel 7 (a driving wheel speed) for the CPU 21. The CPU 21 subtracts the driven wheel speed from the driving wheel speed to obtain the pre-correction slip signal.

The CPU 21 obtains an upper limit value and a lower limit value of the pre-correction slip signal corresponding to the driven wheel speed (otherwise, the driving wheel speed or an average value between the driven wheel speed and the driving wheel speed) on the basis of the limit data stored in the memory 23 (same as the one described in Embodiment 2) and the driven wheel speed (the driving wheel speed in the case that the limit data is a correlation of the upper limit value and the lower limit value of the pre-correction slip signal with the driving wheel speed, and an average value between the speed of the front wheel 4 (the driven wheel speed) and the speed of the rear wheel 7 (the driving wheel speed) in the case that the limit data is a correlation of the upper limit value and the lower limit value of the pre-correction slip signal with the average value between the speed of the front wheel 4 (the driven wheel speed) and the speed of the rear wheel 7 (the driving wheel speed)).

The CPU 21 limits the pre-correction slip signal so that the pre-correction slip signal would be equal to or more than the lower limit value and equal to or less than the upper limit value, similarly to Embodiment 2. Further, the CPU 21 reads in the time constant data stored in the memory 23. In Modification 4, the time constant data indicates a correlation of torque of the engine 10a with a time constant. The CPU 21 calculates a cutoff frequency, which is based on the time constant data, on the basis of the time constant data and the driving source torque detected by means of the torque detection part 34.

The CPU 21 takes out only a low frequency component (same as the low frequency component in Embodiment 1, namely, a part supposed to be the lean component) from the pre-correction slip signal limited as described above on the basis of the calculated cutoff frequency.

The CPU 21 subtracts the low frequency component from the pre-correction slip signal to obtain the corrected slip signal. The CPU 21 outputs the corrected slip signal to the drive circuit 24. The drive circuit 24 outputs a control signal corresponding to the corrected slip signal to the driving force adjusting means 33 and the throttle drive actuator 14. The driving force control means 33 and the throttle drive actuator 14 contribute to control an output of the engine 10a.

The above is description of examples of preferred embodiments of the invention. The pre-correction slip signal, however, is not limited to the one obtained by subtracting the driven wheel speed from the driving wheel speed. The pre-correction slip signal is not specifically limited so long as it is a signal correlated with a slip calculated on the basis of the driving wheel speed and the driven wheel speed. For example, the pre-correction slip signal may be obtained by dividing the driving wheel speed by the driven wheel speed.

### Description of the Reference Numerals and Signs

1: MOTORCYCLE
4: FRONT WHEEL (DRIVEN WHEEL)
7: REAR WHEEL (DRIVING WHEEL)
10: ENGINE UNIT
10a: ENGINE (DRIVING SOURCE)
11: DRIVING FORCE TRANSMITTING MEANS
12: THROTTLE VALVE
13: THROTTLE OPENING SENSOR
14: THROTTLE DRIVE ACTUATOR
16: SEAT
20: ECU (CONTROL PART: ECU 20 + DRIVING FORCE ADJUSTING MEANS 33)
21: CPU (OPERATION PART: CPU 21 + DRIVE CIRCUIT 24)
22: LOW-PASS FILTER
23: STORING DEVICE
24: DRIVE CIRCUIT
25: HIGH-PASS FILTER
26: LIMIT PART
31: DRIVEN WHEEL SPEED SENSOR
32: DRIVING WHEEL SPEED SENSOR
33: DRIVING FORCE ADJUSTING MEANS (DRIVING FORCE ADJUSTING PART)
34: TORQUE DETECTION PART

## Claims

1. A motorcycle (1) comprising:
a driving source (10a);
a driving wheel (7) driven by the driving source (10a) ;
a driven wheel (4); and
**characterized by**;
a control part (20, 33), wherein the control part (20, 33) controls the driving source (10a) on the basis of a corrected slip signal obtained by subtracting a low frequency component of a pre-correction slip signal from the pre-correction slip signal calculated on the basis of a speed of the driving wheel (7) and a speed of the driven wheel (4).

2. The motorcycle (1) according to Claim 1, further comprising:
a driving wheel speed sensor (32) for detecting a speed of the driving wheel (7); and
a driven wheel speed sensor (31) for detecting a speed of the driven wheel (4).

3. The motorcycle (1) according to Claim 1 or 2, wherein the pre-correction slip signal is obtained by subtracting a speed of the driven wheel (4) from a speed of the driving wheel (7).

4. The motorcycle (1) according to Claim 1 or 2, wherein the pre-correction slip signal is obtained by dividing a speed of the driving wheel (7) by a speed of the driven wheel (4).

5. The motorcycle (1) according to any preceding Claim, wherein the low frequency component is a component having a frequency equal to or less than 5 hertz.

6. The motorcycle (1) according to any preceding Claim, wherein the control part (20, 33) includes:
an operation part (21, 24) for outputting a control signal corresponding to the corrected slip signal; and
a driving force adjusting part (33) for controlling the driving source (10a) in accordance with the control signal.

7. The motorcycle (1) according to Claim 6, wherein the control part (20, 33) further includes:
a low-pass filter (22) for taking out the low frequency component from the pre-correction slip signal;
wherein the operation part (21, 24) calculates the pre-correction slip signal, outputs the pre-correction slip signal to the low-pass filter (22) and subtracts the low frequency component taken out through the low-pass filter (22) from the pre-correction slip signal to obtain the corrected slip signal.

8. The motorcycle (1) according to Claim 6, wherein the operation part (21, 24) calculates the pre-correction slip signal, takes out the low frequency component from the pre-correction slip signal and subtracts the low frequency component from the pre-correction slip signal to obtain the corrected slip signal.

9. The motorcycle (1) according to any one of Claims I to 5, wherein the control part (20, 33) includes:
a high-pass filter (25) for taking out a high frequency component other than the low frequency component from the pre-correction slip signal;
an operation part (21, 24) for calculating the pre-correction slip signal and outputting the pre-correction slip signal to the high-pass filter (25) to output a control signal corresponding to the high frequency component taken out through the high-pass filter (25); and
a driving force adjusting part (33) for controlling the driving source (10a) in accordance with the control signal.

10. The motorcycle (1) according to any one of Claims 1 to 5, wherein the control part (20, 33) includes:
an operation part (21, 24) for calculating the pre-correction slip signal, taking out a high frequency component other than the low frequency component from the pre-correction slip signal and outputting a control signal corresponding to the high frequency component; and
a driving force adjusting part (33) for controlling the driving source (10a) in accordance with the control signal.

11. The motorcycle (1) according to any one of Claims 1 to 5, wherein the control part (20, 33) includes:
a storing part (23) for storing limit data relating to an upper limit value and a lower limit value of the pre-correction slip signal;
a limit part (26) for limiting the pre-correction slip signal on the basis of the limit data so that the pre-correction slip signal would be equal to or more than the lower limit value and equal to or less than the upper limit value;
an operation part (21, 24) for outputting a control signal corresponding to the corrected slip signal obtained by subtracting a low frequency component of the pre-correction slip signal after the limitation from the pre-correction slip signal; and
a driving force adjusting part (33) for controlling the driving source (10a) in accordance with the control signal.

12. The motorcycle (1) according to Claim 11, wherein the control part (20, 33) further includes:
a low-pass filter (22) for taking out the low frequency component from a pre-correction slip signal after the limitation; and
the operation part (21, 24) subtracts the low frequency component of the pre-correction slip signal after the limitation, the low frequency component taken out through the low-pass filter, from the pre-correction slip signal to obtain the corrected slip signal.

13. The motorcycle (1) according to Claim 11 or 12, wherein the limit data indicates a correlation of at least one of a speed of the driving wheel (7) and a speed of the driven wheel (4) with upper limit value data and lower limit value data of the pre-correction slip signal.

14. The motorcycle (1) according to any one of Claims 1 to 5, comprising:
a throttle opening sensor (13) for detecting a throttle opening; and
a torque detection part (34) for detecting torque of the driving source (10a),
wherein the control part (20, 33) includes:
a storing part (23) for storing time constant data indicating a correlation of at least one of a speed of the driving wheel (7), a speed of the driven wheel (4), a throttle opening and torque of the driving source (10a) with a time constant;
an operation part (21, 24) for outputting a control signal corresponding to the corrected slip signal; and
a driving force adjusting part (33) for controlling the driving source (10a) in accordance with the control signal, wherein
the operation part (21, 24) subtracts a low frequency component of the pre-correction slip signal, the low frequency component cut off by means of a cutoff frequency based on the time constant data, from the pre-correction slip signal to obtain the corrected slip signal.

15. The motorcycle (1) according to any one of Claims 1 to 5, wherein the control part (20, 33) include:
a storing part (23) for storing time constant data indicating a correlation of at least one of a speed of the driving wheel (7), a speed of the driven wheel (4), a throttle opening and torque of the driving source (10a) with a time constant and limit data relating to an upper limit value and a lower limit value of the pre-correction slip signal;
a limit part (26) for limiting the pre-correction slip signal on the basis of the limit data so that the pre-correction slip signal would be equal to or more than the lower limit value and equal to or less than the upper limit value;
an operation part (21, 24) for outputting a control signal corresponding to the corrected slip signal; and
a driving force adjusting part (33) for controlling the driving source (10a) in accordance with the control signal, wherein
the operation part (21, 24) subtracts a low frequency component of the pre-correction slip signal after the limitation, the low frequency component cut off by means of a cutoff frequency based on the time constant data, from the pre-correction slip signal to obtain the corrected slip signal.

16. The motorcycle (1) according to any preceding Claim, wherein the width of the driving wheel (7) and the width of the driven wheel (4) are different from each other.

17. The motorcycle (1) according to any preceding Claim, wherein the driving wheel (7) is formed from one or plural wheels.

18. A control device of a motorcycle (1) comprising:
a driving source (10a);
a driving wheel (7) driven by means of the driving source (10a);
a driven wheel (4);
a driving wheel speed sensor (32) for detecting a speed of the driving wheel (7); and
a driven wheel speed sensor (31) for detecting a speed of the driven wheel(4),
the control device controlling the driving source (10a) on the basis of a corrected slip signal obtained by subtracting a low frequency component of a pre-correction slip signal from the pre-correction slip signal obtained by subtracting a speed of the driven wheel (4), the speed detected by means of the driven wheel speed sensor (31), from a speed of the driving wheel (7), the latter speed detected by means of the driving wheel speed sensor (32).

19. A slip quantity detecting device of a motorcycle (1) comprising:
a driving source (10a);
a driving wheel (7) driven by means of the driving source (10a);
a driven wheel (4);
a driving wheel speed sensor (32) for detecting a speed of the driving wheel (7); and
a driven wheel speed sensor (31) for detecting a speed of the driven wheel (4),
the slip quantity detecting device detecting a slip quantity of the motorcycle (1) by subtracting a low frequency component of a pre-correction slip signal from the
pre-correction slip signal obtained by subtracting a speed of the driven wheel (4), the speed detected by means of the driven wheel speed sensor (31), from a speed of the driving wheel (7), the latter speed detected by means of the driving wheel speed sensor (32).

20. A method of controlling a motorcycle (1) comprising a driving source (10a), a driven wheel (4) and a driving wheel (7), said method comprising the steps of:
determining a pre-corrected slip signal by subtracting a speed of the driven wheel (4) from a speed of the driving wheel (7);
**characterized by**;
determining a corrected slip signal by subtracting a low frequency component of a pre-correction slip signal from the pre-correction slip signal; and
controlling the driving source (10a) on the basis of the corrected slip signal.

21. A method of controlling a motorcycle (1) according to Claim 20, the motorcycle (1) further comprising:
a driving wheel speed sensor (32) for detecting a speed of the driving wheel (7); and
a driven wheel speed sensor (31) for detecting a speed of the driven wheel (4),
the method of controlling a motorcycle (1) comprising the further steps of:
detecting a speed of the driven wheel (4) by means of the driven wheel speed sensor (31); and
detecting a speed of the driving wheel (7) by means of the driving wheel speed sensor (32).

22. A method for detecting a slip quantity of a motorcycle (1) comprising:
a driving source (10a);
a driving wheel (7) driven by means of the driving source (10a);
a driven wheel (4);
a driving wheel speed sensor (32) for detecting a speed of the driving wheel (7); and
a driven wheel speed sensor (31) for detecting a speed of the driven wheel (4),
the slip quantity detecting method comprising detecting a slip quantity of the motorcycle (1) by subtracting a low frequency component of a pre-correction slip signal from the pre-correction slip signal obtained by subtracting a speed of the driven wheel (4), the speed detected by means of the driven wheel speed sensor (31), from a speed of the driving wheel (7), the latter speed detected by means of the driving wheel speed sensor (32).

23. A motorcycle (1) according to Claim 1, further comprising:
a driving wheel speed sensor (32) for detecting a speed of the driving wheel (7); and
a driven wheel speed sensor (31) for detecting a speed of the driven wheel (4),
wherein
the speed of the driving wheel (7) is detected by means of the driving wheel speed sensor (32), and the speed of the driven wheel (4) is detected by means of the driven wheel speed sensor (31).

## Patentansprüche

1. Motorrad (1), das aufweist:
eine Antriebsquelle (10a);
ein Antriebsrad (7), das von der Antriebsquelle (10a) angetrieben wird;
ein Abtriebsrad (4); und
**gekennzeichnet durch**
ein Steuerteil (20, 33), wobei das Steuerteil (20, 33) die Antriebsquelle (10a) auf der Basis eines korrigierten Schlupfsignals steuert, das **durch** Subtrahieren eines Niederfrequenzanteils eines Schlupfsignals vor der Korrektur vom Schlupfsignal vor der Korrektur erhalten wird, berechnet auf der Basis einer Drehzahl des Antriebsrades (7) und einer Drehzahl des Abtriebsrades (4).

2. Motorrad (1) nach Anspruch 1, das außerdem aufweist:
einen Antriebsraddrehzahlmesser (32) für das Erfassen einer Drehzahl des Antriebsrades (7); und
einen Abtriebsraddrehzahlmesser (31) für das Erfassen einer Drehzahl des Abtriebsrades (4).

3. Motorrad (1) nach Anspruch 1 oder 2, bei dem das Schlupfsignal vor der Korrektur durch Subtrahieren einer Drehzahl des Abtriebsrades (4) von einer Drehzahl des Antriebsrades (7) erhalten wird.

4. Motorrad (1) nach Anspruch 1 oder 2, bei dem das Schlupfsignal vor der Korrektur durch Dividieren einer Drehzahl des Antriebsrades (7) durch eine Drehzahl des Abtriebsrades (4) erhalten wird.

5. Motorrad (1) nach einem der vorhergehenden Ansprüche, bei dem der Niederfrequenzanteil ein Anteil mit einer Frequenz von gleich oder weniger als 5 Hertz ist.

6. Motorrad (1) nach einem der vorhergehenden Ansprüche, bei dem das Steuerteil (20, 33) umfasst:
ein Funktionsteil (21, 24) für das Ausgeben eines Steuersignals entsprechend dem korrigierten Schlupfsignal; und
ein Antriebskraftregelteil (33) für das Steuern der Antriebsquelle (10a) in Übereinstimmung mit dem Steuersignal

7. Motorrad (1) nach Anspruch 6, bei dem das Steuerteil (20, 33) außerdem umfasst:
einen Tiefpassfilter (22) für das Herausnehmen des Niederfrequenzanteils aus dem Schlupfsignal vor der Korrektur;
wobei das Funktionsteil (21, 24) das Schlupfsignal vor der Korrektur berechnet, das Schlupfsignal vor der Korrektur an den Tiefpassfilter (22) ausgibt und den Niederfrequenzanteil, der vom Tiefpassfilter (22) herausgenommen wird, vom Schlupfsignal vor der Korrektur subtrahiert, um das korrigierte Schlupfsignal zu erhalten.

8. Motorrad (1) nach Anspruch 6, bei dem das Funktionsteil (21, 24) das Schlupfsignal vor der Korrektur berechnet, den Niederfrequenzanteil aus dem Schlupfsignal vor der Korrektur herausnimmt und den Niederfrequenzanteil vom Schlupfsignal vor der Korrektur subtrahiert, um das korrigierte Schlupfsignal zu erhalten.

9. Motorrad (1) nach einem der Ansprüche 1 bis 5, bei dem das Steuerteil (20, 33) umfasst:
einen Hochpassfilter (25) für das Herausnehmen eines Hochfrequenzanteils anders als der Niederfrequenzanteil aus dem Schlupfsignal vor der Korrektur;
ein Funktionsteil (21, 24) für das Berechnen des Schlupfsignals vor der Korrektur und das Ausgeben des Schlupfsignals vor der Korrektur an den Hochpassfilter (25), um ein Steuersignal entsprechend dem Hochfrequenzanteil auszugeben, der vom Hochpassfilter (25) herausgenommen wurde; und
ein Antriebskraftregelteil (33) für das Steuern der Antriebsquelle (10a) in Übereinstimmung mit dem Steuersignal.

10. Motorrad (1) nach einem der Ansprüche 1 bis 5, bei dem das Steuerteil (20, 33) umfasst:
ein Funktionsteil (21, 24) für das Berechnen des Schlupfsignals vor der Korrektur, das Herausnehmen eines Hochfrequenzanteils anders als der Niederfrequenzanteil aus dem Schlupfsignal vor der Korrektur und das Ausgeben eines Steuersignals entsprechend dem Hochfrequenzanteil; und
ein Antriebskraftregelteil (33) für das Steuern der Antriebsquelle (10a) in Übereinstimmung mit dem Steuersignal.

11. Motorrad (1) nach einem der Ansprüche 1 bis 5, bei dem das Steuerteil (20, 33) umfasst:
ein Speicherteil (23) für das Speichern der Grenzdaten, die einen oberen Grenzwert und einen unteren Grenzwert des Schlupfsignals vor der Korrektur betreffen;
ein Begrenzungsteil (26) für das Begrenzen des Schlupfsignals vor der Korrektur auf der Basis der Grenzdaten, so dass das Schlupfsignal vor der Korrektur gleich oder größer als der untere Grenzwert und gleich oder kleiner als der obere Grenzwert sein würde;
ein Funktionsteil (21, 24) für das Ausgeben eines Steuersignals entsprechend dem korrigierten Schlupfsignal, das durch Subtrahieren eines Niederfrequenzanteils des Schlupfsignals vor der Korrektur nach der Begrenzung vom Schlupfsignal vor der Korrektur erhalten wird; und
ein Antriebskraftregelteil (33) für das Steuern der Antriebsquelle (10a) in Übereinstimmung mit dem Steuersignal.

12. Motorrad (1) nach Anspruch 11, bei dem das Steuerteil (20, 33) außerdem umfasst:
einen Tiefpassfilter (22) für das Herausnehmen des Niederfrequenzanteils aus einem Schlupfsignal vor der Korrektur nach der Begrenzung; und
wobei das Funktionsteil (21, 24) den Niederfrequenzanteil des Schlupfsignals vor der Korrektur nach der Begrenzung, wobei der Niederfrequenzanteil mittels des Tiefpassfilters herausgenommen wird, vom Schlupfsignal vor der Korrektur subtrahiert, um das korrigierte Schlupfsignal zu erhalten.

13. Motorrad (1) nach Anspruch 11 oder 12, bei dem die Grenzdaten eine Wechselbeziehung von mindestens einem von einer Drehzahl des Antriebsrades (7) und einer Drehzahl des Abtriebsrades (4) mit den oberen Grenzwertdaten und den unteren Grenzwertdaten des Schlupfsignals vor der Korrektur anzeigen.

14. Motorrad (1) nach einem der Ansprüche 1 bis 5, das aufweist:
einen Drosselöffnungssensor (13) fiir das Erfassen einer Drosselöffnung; und
ein Drehmomenterfassungsteil (34) für das Erfassen des Drehmomentes der Antriebsquelle (10a),
wobei das Steuerteil (20, 33) umfasst:
ein Speicherteil (23) für das Speichern von Zeitkonstantendaten, die eine Wechselbeziehung von mindestens einem von einer Drehzahl des Antriebsrades (7), einer Drehzahl des Abtriebsrades (4), einer Drosselöffnung und einem Drehmoment der Antriebsquelle (10a) mit einer Zeitkonstanten anzeigt;
ein Funktionsteil (21, 24) für das Ausgeben eines Steuersignals entsprechend dem korrigierten Schlupfsignal; und
ein Antriebskraftregelteil (33) für das Steuern der Antriebsquelle (10a) in Übereinstimmung mit dem Steuersignal, wobei
das Funktionsteil (21, 24) einen Niederfrequenzanteil des Schlupfsignals vor der Korrektur, wobei der Niederfrequenzanteil mittels einer Abschneidefrequenz, basierend auf den Zeitkonstantendaten, abgeschnitten wird, vom Schlupfsignal vor der Korrektur subtrahiert, um das korrigierte Schlupfsignal zu erhalten.

15. Motorrad (1) nach einem der Ansprüche 1 bis 5, bei dem das Steuerteil (20, 33) umfasst:
ein Speicherteil (23) für das Speichern von Zeitkonstantendaten, die eine Wechselbeziehung von mindestens einem von einer Drehzahl des Antriebsrades (7), einer Drehzahl des Abtriebsrades (4), einer Drosselöffnung und einem Drehmoment der Antriebsquelle (10a) mit einer Zeitkonstanten und Grenzdaten in Beziehung zu einem oberen Grenzwert und unteren Grenzwert des Schlupfsignals vor der Korrektur anzeigt;
ein Begrenzungsteil (26) für das Begrenzen des Schlupfsignals vor der Korrektur auf der Basis der Grenzdaten, so dass das Schlupfsignal vor der Korrektur gleich oder größer als der untere Grenzwert und gleich oder kleiner als der obere Grenzwert sein würde;
ein Funktionsteil (21, 24) für das Ausgeben eines Steuersignals entsprechend dem korrigierten Schlupfsignal; und
ein Antriebskraftregelteil (33) für das Steuern der Antriebsquelle (10a) in Übereinstimmung mit dem Steuersignal, wobei
das Funktionsteil (21, 24) einen Niederfrequenzanteil des Schlupfsignals vor der Korrektur nach der Begrenzung, wobei der Niederfrequenzanteil mittels einer Abschneidefrequenz, basierend auf den Zeitkonstantendaten, abgeschnitten wird, vom Schlupfsignal vor der Korrektur subtrahiert, um das korrigierte Schlupfsignal zu erhalten.

16. Motorrad (1) nach einem der vorhergehenden Ansprüche, bei dem die Breite des Antriebsrades (7) und die Breite des Abtriebsrades (4) voneinander unterschiedlich sind.

17. Motorrad (1) nach einem der vorhergehenden Ansprüche, bei dem das Antriebsrad (7) aus einem oder mehreren Rädern gebildet wird.

18. Steuervorrichtung eines Motorrades (1), die aufweist:
eine Antriebsquelle (10a);
ein Antriebsrad (7), das mittels der Antriebsquelle (10a) angetrieben wird;
ein Abtriebsrad (4);
einen Antriebsraddrehzahlmesser (32) für das Erfassen einer Drehzahl des Antriebsrades (7); und
einen Abtriebsraddrehzahlmesser (31) für das Erfassen einer Drehzahl des Abtriebsrades (4),
wobei die Steuervorrichtung die Antriebsquelle (10a) auf der Basis eines korrigierten Schlupfsignals steuert, das durch Subtrahieren eines Niederfrequenzanteils eines Schlupfsignals vor der Korrektur vom Schlupfsignal vor der Korrektur erhalten wird, das durch Subtrahieren einer Drehzahl des Abtriebsrades (4), wobei die Drehzahl mittels des Abtriebsraddrehzahlmessers (31) erfasst wird, von einer Drehzahl des Antriebsrades (7) erhalten wird, wobei letztere Drehzahl mittels des Antriebsraddrehzahlmessers (32) erfasst wird.

19. Schlupfgrößenerfassungsvorrichtung eines Motorrades (1), die aufweist:
eine Antriebsquelle (10a);
ein Antriebsrad (7), das mittels der Antriebsquelle (10a) angetrieben wird;
ein Abtriebsrad (4);
einen Antriebsraddrehzahlmesser (32) für das Erfassen einer Drehzahl des Antriebsrades (7); und
einen Abtriebsraddrehzahlmesser (31) für das Erfassen einer Drehzahl des Abtriebsrades (4),
wobei die Schlupfgrößenerfassungsvorrichtung eine Schlupfgröße des Motorrades (1) durch Subtrahieren eines Niederfrequenzanteils eines Schlupfsignals vor der Korrektur vom Schlupfsignal vor der Korrektur erfasst, das durch Subtrahieren einer Drehzahl des Abtriebsrades (4), wobei die Drehzahl mittels des Abtriebsraddrehzahlmessers (31) erfasst wird, von einer Drehzahl des Antriebsrades (7) erhalten wird, wobei letztere Drehzahl mittels des Antriebsraddrehzahlmessers (32) erfasst wird.

20. Verfahren zum Steuern eines Motorrades (1), das eine Antriebsquelle (10a), ein Abtriebsrad (4) und ein Antriebsrad (7) aufweist, wobei das Verfahren die folgenden Schritte aufweist:
Ermitteln eines Schlupfsignals vor der Korrektur durch Subtrahieren einer Drehzahl des Abtriebsrades (4) von einer Drehzahl des Antriebsrades (7);
**gekennzeichnet durch**:
Ermitteln eines korrigierten Schlupfsignals **durch** Subtrahieren eines Niederfrequenzanteils eines Schlupfsignals vor der Korrektur vom Schlupfsignal vor der Korrektur; und
Steuern der Antriebsquelle (10a) auf der Basis des korrigierten Schlupfsignals.

21. Verfahren zum Steuern eines Motorrades (1) nach Anspruch 20, wobei das Motorrad (1) außerdem aufweist:
einen Antriebsraddrehzahlmesser (32) für das Erfassen einer Drehzahl des Antriebsrades (7); und
einen Abtriebsraddrehzahlmesser (31) für das Erfassen einer Drehzahl des Abtriebsrades (4),
wobei das Verfahren zum Steuern eines Motorrades (1) die weiteren folgenden Schritte aufweist:
Erfassen einer Drehzahl des Abtriebsrades (4) mittels des Abtriebsraddrehzahlmessers (31); und
Erfassen einer Drehzahl des Antriebsrades (7) mittels des Antriebsraddrehzahlmessers (32).

22. Verfahren zum Erfassen einer Schlupfgröße eines Motorrades (1), das aufweist:
eine Antriebsquelle (10a);
ein Antriebsrad (7), das mittels der Antriebsquelle (10a) angetrieben wird;
ein Abtriebsrad (4);
einen Antriebsraddrehzahlmesser (32) für das Erfassen einer Drehzahl des Antriebsrades (7); und
einen Abtriebsraddrehzahlmesser (31) für das Erfassen einer Drehzahl des Abtriebsrades (4),
wobei das Verfahren zur Schlupfgrößenerfassung den folgenden Schritt aufweist: Erfassen einer Schlupfgröße des Motorrades (1) durch Subtrahieren eines Niederfrequenzanteils eines Schlupfsignals vor der Korrektur vom Schlupfsignal vor der Korrektur, das durch Subtrahieren einer Drehzahl des Abtriebsrades (4), wobei die Drehzahl mittels des Abtriebsraddrehzahlmessers (31) erfasst wird, von einer Drehzahl des Antriebsrades (7) erhalten wird, wobei letztere Drehzahl mittels des Antriebsraddrehzahlmessers (32) erfasst wird.

23. Motorrad (1) nach Anspruch 1, das außerdem aufweist:
einen Antriebsraddrehzahlmesser (32) für das Erfassen einer Drehzahl des Antriebsrades (7); und
einen Abtriebsraddrehzahlmesser (31) für das Erfassen einer Drehzahl des Abtriebsrades (4),
wobei
die Drehzahl des Antriebsrades (7) mittels des Antriebsraddrehzahlmessers (32) und die Drehzahl des Abtriebsrades (4) mittels des Abtriebsraddrehzahlmessers (31) erfasst werden.

## Revendications

1. Motocyclette (1), comprenant :
une source d'entraînement (10a) ;
une roue motrice (7), entraînée par la source d'entraînement (10a);
une roue menée (4) ; et
**caractérisée par** :
une partie de commande (20, 33), la partie de commande (20, 33) contrôlant la source d'entraînement (10a) sur la base d'un signal de patinage corrigé, obtenu en soustrayant une composante basse fréquence d'un signal de patinage de précorrection du signal de patinage de précorrection calculé sur la base d'une vitesse de la roue motrice (7) et d'une vitesse de la roue menée (4).

2. Motocyclette (1) selon la revendication 1, comprenant en outre :
un capteur de la vitesse de la roue motrice (32), pour détecter une vitesse de la roue motrice (7) ; et
un capteur de la vitesse de la roue menée (31), pour détecter une vitesse de la roue menée (4).

3. Motocyclette (1) selon les revendications 1 ou 2, dans laquelle le signal de patinage de précorrection est obtenu en soustrayant une vitesse de la roue menée (4) d'une vitesse de la route motrice (7).

4. Motocyclette (1) selon les revendications 1 ou 2, dans laquelle le signal de patinage de précorrection est obtenu en divisant une vitesse de la roue motrice (7) par une vitesse de la roue menée (4).

5. Motocyclette (1) selon l'une quelconque des revendications précédentes, dans laquelle la composante basse fréquence est une composante ayant une fréquence égale ou inférieure à 5 Hertz.

6. Motocyclette (1) selon l'une quelconque des revendications précédentes, dans laquelle la partie de commande (20, 33) englobe :
une partie opérationnelle (21, 24), pour transmettre un signal de commande correspondant au signal de patinage corrigé ; et
une partie d'ajustement de la force d'entraînement (33), pour contrôler la source d'entraînement (10a) en fonction du signal de commande.

7. Motocyclette (1) selon la revendication 6, dans laquelle la partie de commande (20, 33) englobe en outre :
un filtre passe-bas (22), pour extraire la composante basse fréquence du signal de patinage de précorrection ;
la partie opérationnelle (21, 24) calculant le signal de patinage de précorrection, transmettant un signal de patinage de précorrection au filtre passe-bas (22) et soustrayant la composante basse fréquence extraite par le filtre passe-bas (22) du signal de patinage de précorrection, pour obtenir le signal de patinage corrigé.

8. Motocyclette (1) selon la revendication 6, dans laquelle la partie opérationnelle (21, 24) calcule le signal de patinage de précorrection, extrait la composante basse fréquence du signal de patinage de précorrection et soustrait la composante basse fréquence du signal de patinage de précorrection pour obtenir le signal de patinage corrigé.

9. Motocyclette (1) selon l'une quelconque des revendications 1 à 5, dans laquelle la partie de commande (20, 33) englobe :
un filtre passe-haut (25), pour extraire une composante haute fréquence, différente de la composante basse fréquence, du signal de patinage de précorrection ;
une partie opérationnelle (21, 24), pour calculer le signal de patinage de précorrection et transmettre le signal de patinage de précorrection au filtre passe-haut (25), pour transmettre un signal de commande correspondant à la composante haute fréquence extraite par le filtre passe-haut (25) ; et
une partie d'ajustement de la force d'entraînement (33), pour contrôler la source d'entraînement (10a) en fonction du signal de commande.

10. Motocyclette (1) selon l'une quelconque des revendications 1 à 5, dans laquelle la partie de commande (20, 33) englobe :
une partie opérationnelle (21, 24) pour calculer le signal de patinage de précorrection, extraire une composante haute fréquence, différente de la composante basse fréquence, du signal de patinage de précorrection et transmettre un signal de commande correspondant à la composante haute fréquence ; et
une partie d'ajustement de la force d'entraînement (33), pour contrôler la source d'entraînement (10a) en fonction du signal de commande.

11. Motocyclette (1) selon l'une quelconque des revendications 1 à 5, dans laquelle la partie de commande (20, 33) englobe :
une partie de stockage (23) pour stocker des données limites, relatives à une valeur limite supérieure et à une valeur limite inférieure du signal de patinage de précorrection ;
une partie de limitation (26) pour limiter le signal de patinage de précorrection sur la base des données limites, de sorte que le signal de patinage de précorrection soit égal ou supérieur à la valeur limite inférieure et égal ou inférieur à la valeur limite supérieure ;
une partie opérationnelle (21, 24), pour transmettre un signal de commande correspondant au signal de patinage corrigé obtenu en soustrayant une composante basse fréquence du signal de patinage de précorrection après la limitation du signal de patinage de précorrection ; et
une partie d'ajustement de la force d'entraînement (33) pour contrôler la source d'entraînement (10a) en fonction du signal de commande.

12. Motocyclette (1) selon la revendication 11, dans laquelle la partie de commande (20, 33) englobe en outre :
un filtre passe-bas (22), pour extraire la composante basse fréquence du signal de patinage de précorrection après la limitation ; et
la partie opérationnelle (21, 24) soustrayant la composante basse fréquence du signal de patinage de précorrection après la limitation, la composante basse fréquence extraite par le filtre passe-bas, du signal de patinage de précorrection, pour obtenir le signal de patinage corrigé.

13. Motocyclette (1) selon les revendications 11 ou 12, dans laquelle les données limites indiquent une corrélation entre au moins une vitesse, une vitesse de la roue motrice (7) ou une vitesse de la roue menée (4), et des données sur la valeur limite supérieure et la valeur limite inférieure du signal de patinage de précorrection.

14. Motocyclette (1) selon l'une quelconque des revendications 1 à 5, comprenant :
un capteur de l'ouverture du papillon des gaz (13), pour détecter une ouverture du papillon des gaz ; et
une partie de détection du couple (34), pour détecter le couple de la source d'entraînement (10a) ;
dans laquelle la partie de commande (20, 33) englobe :
une partie de stockage (23), pour stocker des données sur la constante de temps, indiquant une corrélation entre au moins un paramètre, une vitesse de la roue motrice (7), une vitesse de la roue menée (4), une ouverture du papillon des gaz ou le couple de la source d'entraînement (10a), et une constante de temps ;
une partie opérationnelle (21, 24), pour transmettre un signal de commande correspondant au signal de patinage corrigé ; et
une partie d'ajustement de la force d'entraînement (33), pour contrôler la source d'entraînement (10a) en fonction du signal de commande ; dans laquelle
la partie opérationnelle (21, 24) soustrait une composante basse fréquence du signal de patinage de précorrection, la composante basse fréquence extraite par l'intermédiaire d'une fréquence de coupure sur la base des données sur la constante de temps, du signal de patinage de précorrection, pour obtenir le signal de patinage corrigé.

15. Motocyclette (1) selon l'une quelconque des revendications 1 à 5, dans laquelle la partie de commande (20, 33) englobe :
une partie de stockage (23) pour stocker des données sur la constante de temps, indiquant une corrélation entre au moins un paramètre, une vitesse de la roue motrice (7), une vitesse de la roue menée (4), une ouverture du papillon des gaz ou le couple de la source d'entraînement (10a) et une constante de temps, avec des données limites relatives à une valeur limite supérieure et à une valeur limite inférieure du signal de patinage de précorrection ;
une partie de limitation (26), pour limiter le signal de patinage de précorrection sur la base des données limites, de sorte que le signal de patinage de précorrection soit égal ou supérieur à la valeur limite inférieure et égal ou inférieur à la valeur limite supérieure ;
une partie opérationnelle (21, 24), pour transmettre un signal de commande correspondant au signal de patinage corrigé ; et
une partie d'ajustement de la force d'entraînement (33), pour contrôler la source d'entraînement (10a) en fonction du signal de commande, dans laquelle
la partie opérationnelle (21, 24) soustrait une composante basse fréquence du signal de patinage de précorrection après la limitation, la composante basse fréquence extraite par l'intermédiaire d'une fréquence de coupure sur la base des données sur la constante du temps, du signal de patinage de précorrection, pour obtenir le signal de patinage corrigé.

16. Motocyclette (1) selon l'une quelconque des revendications précédentes, dans laquelle la largeur de la roue motrice (7) et la largeur de la roue menée (4) sont différentes l'une de l'autre.

17. Motocyclette (1) selon l'une quelconque des revendications précédentes, dans laquelle la roue motrice (7) est formée à partir d'une ou de plusieurs roues.

18. Dispositif de commande d'une motocyclette (1), comprenant :
une source d'entraînement (10a) ;
une roue motrice (7), entraînée par l'intermédiaire de la source d'entraînement (10a) ;
une roue menée (4) ;
un capteur de la vitesse de la roue motrice (32), pour détecter une vitesse de la roue motrice (7) ; et
un capteur de la vitesse de la roue menée (31), pour détecter une vitesse de la roue menée (4) ;
le dispositif de commande contrôlant la source d'entraînement (10a) sur la base d'un signal de patinage corrigé obtenu en soustrayant une composante basse fréquence d'un signal de patinage de précorrection du signal de patinage de précorrection obtenu en soustrayant une vitesse de la roue menée (4), la vitesse détectée par le capteur de la vitesse de la roue menée (31), d'une vitesse de la roue motrice (7), cette dernière vitesse étant détectée par le capteur de la vitesse de la roue motrice (32).

19. Dispositif de détection de l'importance du patinage d'une motocyclette (1), comprenant :
une source d'entraînement (10a) ;
une roue motrice (7) entraînée par l'intermédiaire de la source d'entraînement (10a) ;
une roue menée (4) ;
un capteur de la vitesse de la roue motrice (32), pour détecter une vitesse de la roue motrice (7) ; et
un capteur de la vitesse de la roue menée (31), pour détecter une vitesse de la roue menée (4) ;
le dispositif de détection de l'importance du patinage détectant une importance du patinage de la motocyclette (1) en soustrayant une composante basse fréquence d'un signal de patinage de précorrection du signal de patinage de précorrection obtenu en soustrayant une vitesse de la roue menée (4), la vitesse détectée par le capteur de la vitesse de la roue menée (31), d'une vitesse de la roue motrice (7), cette dernière vitesse étant détectée par le capteur de la vitesse de la roue motrice (32).

20. Procédé de commande d'une motocyclette (1), comprenant une source d'entraînement (10a), une roue menée (4) et une roue motrice (7), ledit procédé comprenant l'étape ci-dessous :
détermination d'un signal de patinage de précorrection en soustrayant une vitesse de la roue menée (4) d'une vitesse de la roue motrice (7) ;
**caractérisé par** les étapes ci-dessous :
détermination d'un signal de patinage corrigé en soustrayant une composante basse fréquence d'un signal de patinage de précorrection du signal de patinage de précorrection ; et
contrôle de la source d'entraînement (10a) sur la base du signal de patinage corrigé.

21. Procédé de commande d'une motocyclette (1) selon la revendication 20, la motocyclette (1) comprenant en outre :
un capteur de la vitesse de la roue motrice (32), pour détecter une vitesse de la roue motrice (7) ; et
un capteur de la vitesse de la roue menée (31), pour détecter une vitesse de la roue menée (4) ;
le procédé de commande d'une motocyclette (1) comprenant en outre les étapes additionnelles ci-dessous :
détection d'une vitesse de la roue menée (4) par l'intermédiaire du capteur de la vitesse de la roue menée (31) ; et
détection d'une vitesse de la roue motrice (7) par l'intermédiaire du capteur de la vitesse de la roue motrice (32).

22. Procédé de détection de l'importance du patinage d'une motocyclette (1), comprenant :
une source d'entraînement (10a)
une roue motrice (7), entraînée par la source d'entraînement (10a) ;
une roue menée (4) ;
un capteur de la vitesse de la roue motrice (32), pour détecter une vitesse de la roue motrice (7) ; et
un capteur de la vitesse de la roue menée (31), pour détecter une vitesse de la roue menée (4) ;
le procédé de détection de l'importance du patinage comprenant l'étape de détection d'une importance du patinage de la motocyclette (1) en soustrayant une composante basse fréquence d'un signal de patinage de précorrection du signal de patinage de précorrection obtenu en soustrayant une vitesse de la roue menée (4), la vitesse détectée par le capteur de la vitesse de la roue menée (31), d'une vitesse de la roue motrice (7), cette dernière vitesse étant détectée par le capteur de la vitesse de la roue motrice (32).

23. Motocyclette (1) selon la revendication 1, comprenant en outre :
un capteur de la vitesse de la roue motrice (32), pour détecter une vitesse de la roue motrice (7) ; et
un capteur de la vitesse de la roue menée (31), pour détecter une vitesse de la roue menée (4) ;
dans laquelle
la vitesse de la roue motrice (7) est détectée par l'intermédiaire du capteur de la vitesse de la roue motrice (32), la vitesse de la roue menée (4) étant détectée par l'intermédiaire du capteur de la vitesse de la roue menée (31).
